(19) Europäisches Patentamt

European Patent Office

Office européen des brevets

(11) **EP 4 451 675 A1**

(12) **EUROPEAN PATENT APPLICATION**
published in accordance with Art. 153(4) EPC

(43) Date of publication:
**23.10.2024 Bulletin 2024/43**

(21) Application number: **23759095.5**

(22) Date of filing: **17.02.2023**

(51) International Patent Classification (IPC):
**H04N 19/436** (2014.01)    **H04N 19/433** (2014.01)

(52) Cooperative Patent Classification (CPC):
**H04L 65/60; H04N 19/124; H04N 19/13;
H04N 19/42; H04N 19/433; H04N 19/436;
H04N 19/44; H04N 19/91**

(86) International application number:
**PCT/CN2023/076726**

(87) International publication number:
**WO 2023/160470 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022 CN 202210186914**

(71) Applicant: **Huawei Technologies Co., Ltd.
Shenzhen, Guangdong 518129 (CN)**

(72) Inventors:
• **LUO, Yi
Shenzhen, Guangdong 518129 (CN)**
• **YANG, Haitao
Shenzhen, Guangdong 518129 (CN)**
• **FENG, Junkai
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **ENCODING/DECODING METHOD AND APPARATUS**

(57)    Embodiments of this application disclose an encoding method and apparatus, and a decoding method and apparatus, and relate to the field of media technologies, to improve decoding performance of a decoder. The method includes: first obtaining a bitstream; then, obtaining a plurality of data packets based on the bitstream; next, sending, based on identifiers of the plurality of data packets, the plurality of data packets to a plurality of entropy decoders for decoding, to obtain a plurality of syntax elements; and finally, restoring media content based on the plurality of syntax elements. According to the decoding method provided in embodiments of this application, in a decoding process, a single entropy decoder is not used for decoding, but data packets are separately sent, based on identifiers of the data packets, to the plurality of entropy decoders for parallel decoding. Compared with decoding performed by using the single entropy decoder, parallel decoding performed by using the plurality of entropy decoders can improve a throughput of the decoders, to improve decoding performance of the decoders.

```
┌──────────────────────────────────────┐
│         Obtain a bitstream           │── S1201
└──────────────────────────────────────┘
                    │
┌──────────────────────────────────────┐
│ Obtain a plurality of data packets   │── S1202
│        based on the bitstream        │
└──────────────────────────────────────┘
                    │
┌──────────────────────────────────────┐
│ Send, based on identifiers of the    │
│ plurality of data packets, the       │── S1203
│ plurality of data packets to a       │
│ plurality of entropy decoders for    │
│ decoding, to obtain a plurality of   │
│ syntax elements                      │
└──────────────────────────────────────┘
                    │
┌──────────────────────────────────────┐
│ Restore media content based on the   │── S1204
│ plurality of syntax elements         │
└──────────────────────────────────────┘
```

FIG. 12

**Description**

This application claims priority to Chinese Patent Application No. 202210186914.6, filed with the China National Intellectual Property Administration on February 28, 2022 and entitled "ENCODING METHOD AND APPARATUS, AND DECODING METHOD AND APPARATUS", which is incorporated herein by reference in its entirety.

**TECHNICAL FIELD**

Embodiments of this application relate to the field of media technologies, and in particular, to an encoding method and apparatus, and a decoding method and apparatus.

**BACKGROUND**

A media device uses a display interface when transmitting media content. When transmitting the media content, the display interface may compress the media content through an encoding operation, to reduce a bandwidth in a media content transmission process. After receiving compressed media content, a receiving end needs to decode the compressed media content through a decoding operation, to restore the media content.

Duration required for a process in which a decoder side decodes the compressed media content to restore the media content is related to decoding performance of a decoder. How to improve the decoding performance of the decoder is one of problems that need to be urgently resolved by a person skilled in the art.

**SUMMARY**

Embodiments of this application provide an encoding method and apparatus, and a decoding method and apparatus, to improve decoding performance of a decoder. To achieve the foregoing objective, the following technical solutions are used in embodiments of this application.

According to a first aspect, an embodiment of this application provides a decoding method. The method includes: first obtaining a bitstream; then, obtaining a plurality of data packets based on the bitstream; next, sending, based on identifiers of the plurality of data packets, the plurality of data packets to a plurality of entropy decoders for decoding, to obtain a plurality of syntax elements; and finally, restoring media content based on the plurality of syntax elements.

It can be learned that according to the decoding method provided in this embodiment of this application, in a decoding process, a single entropy decoder is not used for decoding, but the data packets are separately sent, based on the identifiers of the data packets, to the plurality of entropy decoders for parallel decoding. Compared with decoding performed by using the single entropy decoder, parallel decoding performed by using the plurality of entropy decoders can improve a throughput of a decoder, to improve decoding performance of the decoder. In addition, because each data packet carries an identifier, a decoder side may quickly determine, by using the identifier, an entropy decoder corresponding to the data packet, to implement parallel decoding by using the plurality of entropy decoders with low complexity.

Optionally, the media content may include at least one of a picture, a picture slice, or a video.

In a possible implementation, the sending, based on identifiers of the plurality of data packets, the plurality of data packets to a plurality of entropy decoders for decoding, to obtain a plurality of syntax elements may include: determining, based on the identifiers of the plurality of data packets, a substream to which each of the plurality of data packets belongs; sending each data packet to a decoding buffer of the substream to which the data packet belongs; and sending a data packet in each decoding buffer to an entropy decoder corresponding to the buffer for decoding, to obtain the plurality of syntax elements.

It may be understood that the bitstream may include data packets of a plurality of substreams. Each entropy decoder corresponds to one substream. Therefore, for each data packet in the bitstream, a substream to which the data packet belongs can be determined based on an identifier of the data packet, and then the data packet is sent to a decoding buffer of an entropy decoder corresponding to the substream to which the data packet belongs. Next, the entropy decoder decodes the data packet in the decoding buffer to obtain a syntax element. That is, each data packet obtained by splitting the bitstream can be sent to the corresponding entropy decoder for decoding, to implement parallel decoding by using a plurality of entropy decoders. Parallel decoding performed by using the plurality of entropy decoders can improve the throughput of the decoder, to improve the decoding performance of the decoder.

Optionally, the decoding buffer may be a first in first out (first input first output, FIFO) buffer. A data packet that first enters the decoding buffer first leaves the buffer and enters the entropy decoder for entropy decoding.

In a possible implementation, the restoring media content based on the plurality of syntax elements may include: dequantizing the plurality of syntax elements to obtain a plurality of residuals; and predicting and reconstructing the plurality of residuals to restore the media content.

It can be learned that, parallel decoding performed by using the plurality of entropy decoders can improve the throughput of the decoder, to improve the decoding performance of the decoder. In addition, after parallel entropy decoding is performed on the plurality of data packets in the bitstream to obtain the plurality of syntax elements, the plurality of syntax elements may be dequantized and predicted and reconstructed to restore the media content.

A specific method for dequantization and prediction and reconstruction may be any method that can be figured out by a person skilled in the art for processing. This is not specifically limited in this embodiment of this application. For example, the dequantization may be uniform dequantization.

In a possible implementation, the obtaining a plurality of data packets based on the bitstream may include: splitting the bitstream into the plurality of data packets based on a preset split length.

For example, the bitstream may be split into the plurality of data packets based on a split length of N bits. N is a positive integer.

Optionally, the data packet may include a data header and a data subject. The data header is used to store the identifier of the data packet. For example, a data packet of a length of N bits may include a data header of a length of M bits and a data subject of a length of N-M bits. M and N are fixed values agreed on in an encoding/decoding process.

Optionally, lengths of the foregoing data packets may be the same.

For example, the lengths of the foregoing data packets may all be N bits. When the data packet of the length of N bits is split, the data header of the length of M bits may be extracted, and remaining N-M bits of data are used as the data subject. In addition, data in the data header may be parsed to obtain a mark (which may also be referred to as a substream mark value) of the data packet.

According to a second aspect, an embodiment of this application further provides an encoding method. The method includes: first obtaining a plurality of syntax elements based on media content; then, sending the plurality of syntax elements to entropy encoders for encoding, to obtain a plurality of substreams; and next, interleaving the plurality of substreams into a bitstream, where the bitstream includes a plurality of data packets. The data packet includes an identifier indicating a substream to which the data packet belongs.

It can be learned that in the encoding method provided in this embodiment of this application, each data packet in the bitstream obtained through encoding includes the identifier indicating the substream to which the data packet belongs, and a decoder side may separately send, based on the identifiers, the data packets in the bitstream to a plurality of entropy decoders for parallel decoding. Compared with decoding performed by using a single entropy decoder, parallel decoding performed by using the plurality of entropy decoders can improve a throughput of a decoder, to improve decoding performance of the decoder.

Optionally, the media content may include at least one of a picture, a picture slice, or a video.

For example, an input picture may be split into a form of picture blocks, and then a plurality of syntax elements are obtained based on the picture blocks. Then, the plurality of syntax elements are sent to entropy encoders for encoding, to obtain a plurality of substreams. Next, the plurality of substreams are interleaved into a bitstream.

In a possible implementation, the sending the plurality of syntax elements to entropy encoders for encoding, to obtain a plurality of substreams may include: sending the plurality of syntax elements to a plurality of entropy encoders for encoding, to obtain the plurality of substreams.

For example, the plurality of syntax elements may be sent to three entropy encoders for encoding, to obtain three substreams.

In a possible implementation, the interleaving the plurality of substreams into a bitstream includes: splitting each of the plurality of substreams into a plurality of data packets based on a preset split length; and obtaining the bitstream based on the plurality of data packets.

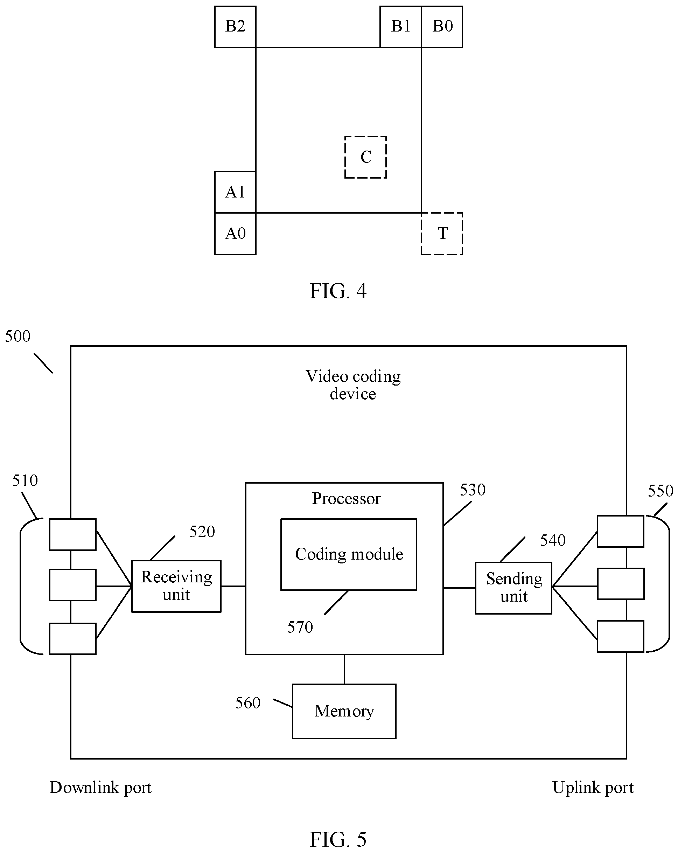

For example, substream interleaving may be performed based on the following steps: Step 1: Select an encoded substream buffer. Step 2: Calculate a quantity K of data packets that can be constructed as floor(S/(N-M)) based on a size S of remaining data in the current encoded substream buffer, where floor is a round-down function. Step 3: If a current picture block is a last block of an input picture or an input picture slice, assume that K=K+1. Step 4: Obtain K consecutive segments of data of a length of N-M bits from the current encoded substream buffer. Step 5: If data in the current encoded substream buffer has less than N-M bits when the data is obtained in step 4, add several Os to the end of the data until a length of the data is N-M bits. Step 6: Use the data obtained in step 4 or step 5 as a data subject, and add a data header, where a length of the data header is M bits, and content of the data header is a substream mark value corresponding to the current encoded substream buffer, to construct a data packet shown in FIG. 5. Step 7: Sequentially input K data packets into a bitstream. Step 8: Select a next encoded substream buffer in a preset order, and go back to step 2; and if processing is completed in all encoded substream buffers, end the substream interleaving operation.

For another example, substream interleaving may alternatively be performed based on the following steps: Step 1: Select an encoded substream buffer. Step 2: Record a size of remaining data in the current encoded substream buffer as S, and if S is greater than or equal to N-M bits, extract data of a length of N-M bits from the current encoded substream buffer. Step 3: If S is less than N-M bits, if a current picture block is a last block of an input picture or an input picture slice, extract all data from the current encoded substream buffer, and add several Os to the end of the data until a length of the data is N-M bits, or if a current picture block is not a last block, skip to step 6. Step 4: Use the data obtained in step 2 or step 3 as a data subject, and add a data header, where a length of the data header is M bits, and content of the data header is a substream mark value corresponding to the current encoded substream buffer, to construct a data packet shown in FIG. 5. Step 5: Input a data packet into a bitstream. Step 6: Select a next encoded substream buffer in a preset order, and go back to step 2; and if data in all encoded substream buffers has less than N-M bits, end the substream interleaving operation.

It can be learned that, in this embodiment of this application, each substream may be split based on the preset split length, to obtain the plurality of data packets, and then the bitstream is obtained based on the plurality of data packets. Because each data packet in the bitstream obtained through encoding includes the identifier indicating the substream to which the data packet belongs, and the decoder side may separately send, based on the identifiers, the data packets in the bitstream to the plurality of entropy decoders for parallel decoding. Compared with decoding performed by using the single entropy decoder, parallel decoding performed by using the plurality of entropy decoders can improve the throughput of the decoder, to improve the decoding performance of the decoder.

Optionally, the encoding buffer may be a FIFO buffer. Data that first enters the encoding buffer first leaves the buffer and enters an entropy encoder for entropy encoding.

A specific method for obtaining the bitstream based on the plurality of data packets may be any method that can be figured out by a person skilled in the art for processing. This is not specifically limited in this embodiment of this application.

For example, the data packets of the substreams may be encoded into the bitstream in a substream order. For example, data packets of a 1st substream are first encoded into the bitstream, and after all the data packets of the 1st substream are encoded into the bitstream, data packets of a 2nd substream are encoded into the bitstream, until all data packets of all the substreams are encoded into the bitstream.

For another example, the data packets of the substreams may be encoded into the bitstream in a polling order. For example, if three substreams are included, one data packet of a 1st substream may be first encoded, then one data packet of a 2nd substream is encoded, and next, one data packet of a 3rd substream is encoded. This process is repeated until data packets of all the substreams are all encoded into the bitstream.

In a possible implementation, the obtaining a plurality of syntax elements based on media content may include: predicting the media content to obtain a plurality of pieces of predicted data; and quantizing the plurality of pieces of predicted data to obtain the plurality of syntax elements.

A specific method for quantization and prediction may be any method that can be figured out by a person skilled in the art for processing. This is not specifically limited in this embodiment of this application. For example, the quantization may be uniform quantization.

It can be learned that, in this embodiment of this application, the plurality of syntax elements may be obtained based on the media content, and then the bitstream is obtained by encoding the plurality of syntax elements. Because each data packet in the bitstream includes the identifier indicating the substream to which the data packet belongs, and the decoder side may separately send, based on the identifiers, the data packets in the bitstream to the plurality of entropy decoders for parallel decoding. Compared with decoding performed by using the single entropy decoder, parallel decoding performed by using the plurality of entropy decoders can improve the throughput of the decoder, to improve the decoding performance of the decoder.

Optionally, the data packet may include a data header and a data subject. The data header is used to store the identifier of the data packet. For example, a data packet of a length of N bits may include a data header of a length of M bits and a data subject of a length of N-M bits. M and N are fixed values agreed on in an encoding/decoding process.

Optionally, lengths of the foregoing data packets may be the same.

For example, the lengths of the foregoing data packets may all be N bits. When the data packet of the length of N bits is split, the data header of the length of M bits may be extracted, and remaining N-M bits of data are used as the data subject. In addition, data in the data header may be parsed to obtain a mark (which may also be referred to as a substream mark value) of the data packet.

According to a third aspect, an embodiment of this application further provides a decoding apparatus. The apparatus includes an obtaining unit, a substream de-interleaving unit, a decoding unit, and a restoration unit. The obtaining unit is configured to obtain a bitstream. The substream de-interleaving unit is configured to obtain a plurality of data packets based on the bitstream. The decoding unit is configured to send, based on identifiers of the plurality of data packets, the plurality of data packets to a plurality of entropy decoders for decoding, to obtain a plurality of syntax elements. The restoration unit is configured to restore media content based on the plurality of syntax elements.

In a possible implementation, the decoding unit is specifically configured to: determine, based on the identifiers of the plurality of data packets, a substream to which each of the plurality of data packets belongs; send each data packet to a decoding buffer of the substream to which the data packet belongs; and send a data packet in each decoding buffer to an entropy decoder corresponding to the buffer for decoding, to obtain the plurality of syntax elements.

In a possible implementation, the restoration unit is specifically configured to dequantize the plurality of syntax elements to obtain a plurality of residuals; and predict and reconstruct the plurality of residuals to restore the media content.

In a possible implementation, the substream de-interleaving unit is specifically configured to split the bitstream into the plurality of data packets based on a preset split length.

Optionally, the data packet may include a data header and a data subject. The data header is used to store the identifier of the data packet. For example, a data packet of a length of N bits may include a data header of a length of M bits and a data subject of a length of N-M bits. M and N are fixed values agreed on in an encoding/decoding process.

Optionally, lengths of the foregoing data packets may be the same.

For example, the lengths of the foregoing data packets may all be N bits. When the data packet of the length of N bits is split, the data header of the length of M bits may be extracted, and remaining N-M bits of data are used as the data subject. In addition, data in the data header may be parsed to obtain a mark (which may also be referred to as a substream mark value) of the data packet.

According to a fourth aspect, an embodiment of this application further provides an encoding apparatus. The apparatus includes a syntax unit, an encoding unit, and a substream interleaving unit. The syntax unit is configured to obtain a plurality of syntax elements based on media content. The encoding unit is configured to send the plurality of syntax elements to entropy encoders for encoding, to obtain a plurality of substreams. The substream interleaving unit is configured to interleave the plurality of substreams into a bitstream, where the bitstream includes a plurality of data packets, and the data packet includes an identifier indicating a substream to which the data packet belongs.

In a possible implementation, the substream interleaving unit is specifically configured to split each of the plurality of substreams into a plurality of data packets based on a preset split length; and obtain the bitstream based on the plurality of data packets.

In a possible implementation, the syntax unit is specifically configured to predict the media content to obtain a plurality of pieces of predicted data; and quantize the plurality of pieces of predicted data to obtain the plurality of syntax elements.

Optionally, the data packet may include a data header and a data subject. The data header is used to store the identifier of the data packet. For example, a data packet of a length of N bits may include a data header of a length of M bits and a data subject of a length of N-M bits. M and N are fixed values agreed on in an encoding/decoding process.

Optionally, lengths of the foregoing data packets may be the same.

For example, the lengths of the foregoing data packets may all be N bits. When the data packet of the length of N bits is split, the data header of the length of M bits may be extracted, and remaining N-M bits of data are used as the data subject. In addition, data in the data header may be parsed to obtain a mark (which may also be referred to as a substream mark value) of the data packet.

According to a fifth aspect, an embodiment of this application further provides a decoding apparatus. The apparatus includes at least one processor, and when the at least one processor executes program code or instructions, the method according to any one of the first aspect or the possible implementations of the first aspect is implemented.

Optionally, the apparatus may further include at least one memory, and the at least one memory is configured to store the program code or the instructions.

According to a sixth aspect, an embodiment of this application further provides an encoding apparatus. The apparatus includes at least one processor, and when the at least one processor executes program code or instructions, the method according to any one of the second aspect or the possible implementations of the second aspect is implemented.

Optionally, the apparatus may further include at least one memory, and the at least one memory is configured to store the program code or the instructions.

According to a seventh aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to an eighth aspect, an embodiment of this application further provides a computer-readable storage medium, configured to store a computer program. The computer program is configured to implement the method according to any one of the first aspect or the possible implementations of the first aspect.

According to a ninth aspect, an embodiment of this application further provides a computer program product including instructions. When the computer program product runs on a computer, the computer is enabled to implement the method according to any one of the first aspect or the possible implementations of the first aspect.

The encoding apparatus, the decoding apparatus, the computer storage medium, the computer program product, and the chip provided in embodiments are all configured to perform the encoding method and the decoding method provided above. Therefore, for beneficial effects that can be achieved by the encoding apparatus, the decoding apparatus, the computer storage medium, the computer program product, and the chip, refer to the beneficial effects in the encoding method and the decoding method provided above. Details are not described herein again.

## BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.

FIG. 1a is an example block diagram of a coding system according to an embodiment of this application;

FIG. 1b is an example block diagram of a video coding system according to an embodiment of this application;

FIG. 2 is an example block diagram of a video encoder according to an embodiment of this application;

FIG. 3 is an example block diagram of a video decoder according to an embodiment of this application;

FIG. 4 is an example diagram of a candidate picture block according to an embodiment of this application;

FIG. 5 is an example block diagram of a video coding device according to an embodiment of this application;

FIG. 6 is an example block diagram of an apparatus according to an embodiment of this application;

FIG. 7 is a diagram of an encoding framework according to an embodiment of this application;

FIG. 8 is a diagram of an encoding method according to an embodiment of this application;

FIG. 9 is a diagram of substream interleaving according to an embodiment of this application;

FIG. 10 is another diagram of substream interleaving according to an embodiment of this application;

FIG. 11 is a diagram of a decoding framework according to an embodiment of this application;

FIG. 12 is a diagram of a decoding method according to an embodiment of this application;

FIG. 13 is a diagram of an encoding apparatus according to an embodiment of this application;

FIG. 14 is a diagram of a decoding apparatus according to an embodiment of this application; and

FIG. 15 is a diagram of a structure of a chip according to an embodiment of this application.

## DESCRIPTION OF EMBODIMENTS

The following clearly and completely describes the technical solutions of embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to listed steps or units, but optionally further includes other unlisted steps or units, or optionally further includes another inherent step or unit of the process, the method, the product, or the device.

It should be noted that in the descriptions of embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In the descriptions of embodiment of this application, unless otherwise stated, "a plurality of" means two or more than two.

First, the terms in embodiments of this application are explained.

Interface compression: A media device uses a display interface to transmit a picture and a video. Compression and decompression operations are performed on data of the picture and the video that are transmitted through the display interface. This is referred to as interface compression for short.

Bitstream: The bitstream is a binary stream generated by encoding media content (such as picture content and video content).

Syntax element: The syntax element is data obtained by performing typical encoding operations such as prediction and transform on media content, and is a main input of entropy encoding.

Entropy encoder: The entropy encoder is an encoder module that converts input syntax elements into a bitstream.

Entropy decoder: The entropy decoder is an encoder module that converts an input bitstream into syntax elements.

Substream: The substream is a bitstream obtained by performing entropy encoding on a subset of syntax elements.

Substream mark value: The substream mark value marks an index of a substream to which a data packet belongs.

Substream interleaving: The substream interleaving is an operation of combining a plurality of substreams into a bitstream, and is also referred to as multiplexing (multiplexing).

Substream de-interleaving: The substream de-interleaving is an operation of splitting different substreams from a bitstream, and is also referred to as demultiplexing (demultiplexing).

Data encoding/decoding includes two parts: data encoding and data decoding. Data encoding is performed at a source side (also usually referred to as an encoder side), and usually includes processing (for example, compressing) original data to reduce an amount of data required to represent the original data (for more efficient storage and/or transmission). Data decoding is performed at a destination side (also usually referred to as a decoder side), and usually includes inverse processing relative to the encoder side, to reconstruct the original data. "Encoding/decoding" of data in embodiments of this application should be understood as "encoding" or "decoding" of the data. A combination of an encoding part and a decoding part is also referred to as encoding/decoding (encoding and decoding, CODEC).

In the case of lossless data encoding, the original data may be reconstructed, to be specific, reconstructed original data has same quality as the original data (assuming that there is no transmission loss or no other data losses during storage or transmission). In the case of lossy data encoding, further compression is performed, for example, through quantization, to reduce the amount of data required to represent the original data, and the original data cannot be completely reconstructed on the decoder side, to be specific, quality of reconstructed original data is poorer or worse than quality of the original data.

Embodiments of this application may be applied to video data, other data that has a compression/decompression requirement, and the like. The following uses video data encoding (video encoding for short) as an example to describe embodiments of this application. For other types of data (for example, picture data, audio data, integral data, and other data that has a compression/decompression requirement), refer to the following descriptions. Details are not described in embodiments of this application. It should be noted that, compared with the video encoding, in a process of encoding data such as audio data and integral data, the data does not need to be partitioned into blocks, but the data may be directly encoded.

The video encoding usually means processing of a picture sequence that forms a video or a video sequence. In the field of video encoding, the terms "picture (picture)", "frame (frame)", and "image (image)" may be used as synonyms.

Several video coding standards are used for "lossy hybrid video encoding/decoding" (to be specific, spatial prediction and temporal prediction in pixel domain are combined with 2D transform coding with quantization in transform domain). Each picture in a video sequence is usually partitioned into a set of non-overlapping blocks, and encoding is usually performed at a block level. In other words, an encoder usually processes, that is, encodes, a video at a block (video block) level. For example, a predicted block is generated through spatial (intra) prediction and temporal (inter) prediction; the predicted block is subtracted from a current block (a block being processed/to be processed) to obtain a residual block; and the residual block is transformed in transform domain and quantized to reduce an amount of data to be transmitted (compressed). On a decoder side, an inverse processing part relative to the encoder is performed on an encoded block or a compressed block to reconstruct the current block for representation. In addition, the encoder needs to repeat a processing step of a decoder, so that the encoder and the decoder generate same prediction (for example, intra prediction and inter prediction) and/or reconstructed pixels for processing, that is, encoding, subsequent blocks.

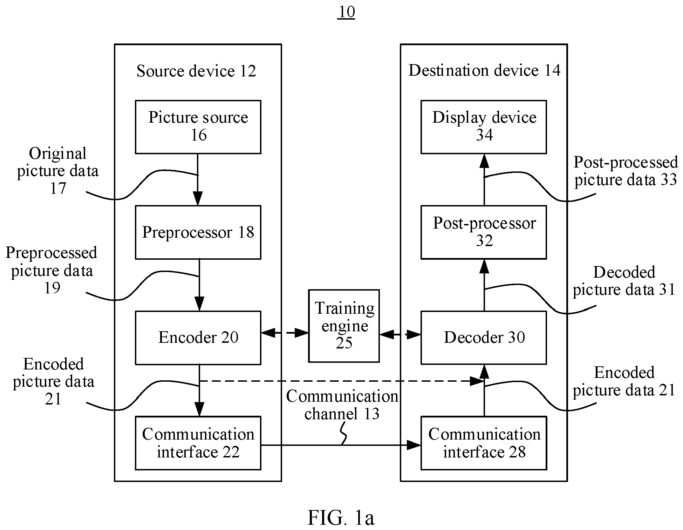

In the following embodiments of a coding system 10, an encoder 20 and a decoder 30 are described based on FIG. 1a to FIG. 3.

FIG. 1a is an example block diagram of a coding system 10 according to an embodiment of this application, for example, a video coding system 10 (also referred to as a coding system 10 for short) that may use a technology in embodiments of this application. A video encoder 20 (also referred to as an encoder 20 for short) and a video decoder 30 (also referred to as a decoder 30 for short) in the video coding system 10 represent devices that may be configured to perform technologies based on various examples described in embodiments of this application.

As shown in FIG. 1a, the coding system 10 includes a source device 12. The source device 12 is configured to provide encoded picture data 21 such as an encoded picture to a destination device 14 for decoding the encoded picture data 21.

The source device 12 includes an encoder 20, and may additionally, that is, optionally, include a picture source 16, a preprocessor (or preprocessing unit) 18, for example, a picture preprocessor, and a communication interface (or communication unit) 22.

The picture source 16 may include or be any type of picture capturing device configured to capture a real-world picture and the like, and/or any type of picture generation device, for example, a computer graphics processing unit configured to generate a computer animated picture, or any type of device configured to obtain and/or provide a real-world picture, a computer generated picture (for example, screen content, a virtual reality (virtual reality, VR) picture, and/or any combination thereof (for example, an augmented reality (augmented reality, AR) picture)). The picture source may be any type of memory or storage for storing any one of the foregoing pictures.

To distinguish between processing performed by the preprocessor (or preprocessing unit) 18, a picture (or picture data) 17 may also be referred to as an original picture (or original picture data) 17.

The preprocessor 18 is configured to receive the original picture data 17, and preprocess the original picture data 17, to obtain a preprocessed picture (or preprocessed picture data) 19. For example, preprocessing performed by the preprocessor 18 may include trimming, color format conversion (for example, conversion from RGB to YCbCr), color correction, or de-noising. It may be understood that the preprocessing unit 18 may be an optional component.

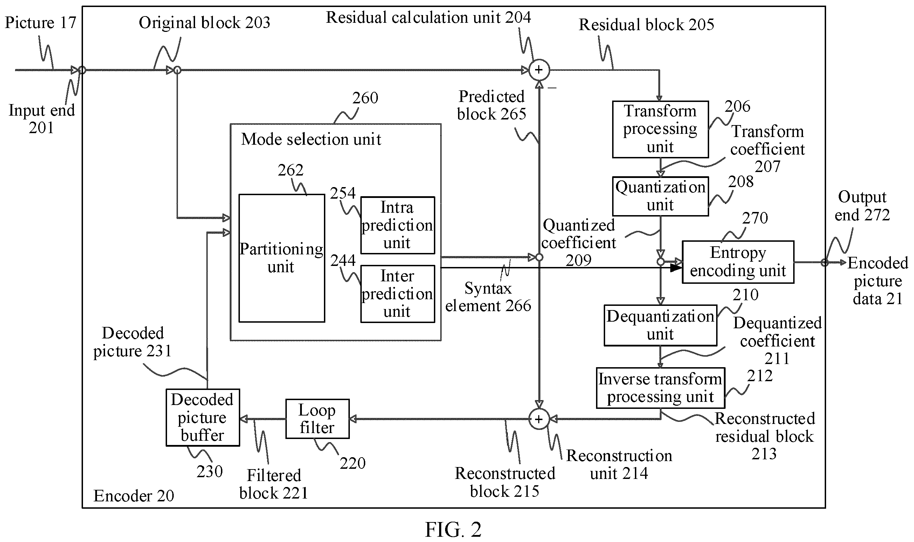

The video encoder (or encoder) 20 is configured to receive the preprocessed picture data 19 and provide the encoded picture data 21 (further descriptions are provided below based on FIG. 2 and the like).

The communication interface 22 in the source device 12 may be configured to receive the encoded picture data 21 and send, through a communication channel 13, the encoded picture data 21 (or any further processed version) to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 in the destination device 14 is configured to receive the encoded picture data 21 (or any further processed version) directly from the source device 12 or any other source device such as a storage device. For example, the storage device is an encoded picture data storage device, and provides the encoded picture data 21 to the decoder 30.

The communication interface 22 and the communication interface 28 may be configured to send or receive the encoded picture data (or encoded data) 21 through a direct communication link between the source device 12 and the destination device 14, for example, a direct wired or wireless connection, or through any type of network, for example, a wired network, a wireless network, or any combination thereof, or any type of private and public networks, or any type of combination thereof.

For example, the communication interface 22 may be configured to encapsulate the encoded picture data 21 into a packet or another appropriate format, and/or process the encoded picture data through any type of transmission encoding or processing, for transmission on a communication link or a communication network.

The communication interface 28, corresponding to the communication interface 22, may be configured to, for example, receive the transmitted data and process the transmitted data through any type of corresponding transmission decoding or processing and/or decapsulation, to obtain the encoded picture data 21.

Both the communication interface 22 and the communication interface 28 may be configured as unidirectional communication interfaces as indicated by an arrow that corresponds to the communication channel 13 and that points from the source device 12 to the destination device 14 in FIG. 1a, or bi-directional communication interfaces, and may be configured to, for example, send and receive messages, to establish a connection, to determine and exchange any other information related to the communication link and/or data transmission such as transmission of the encoded picture data.

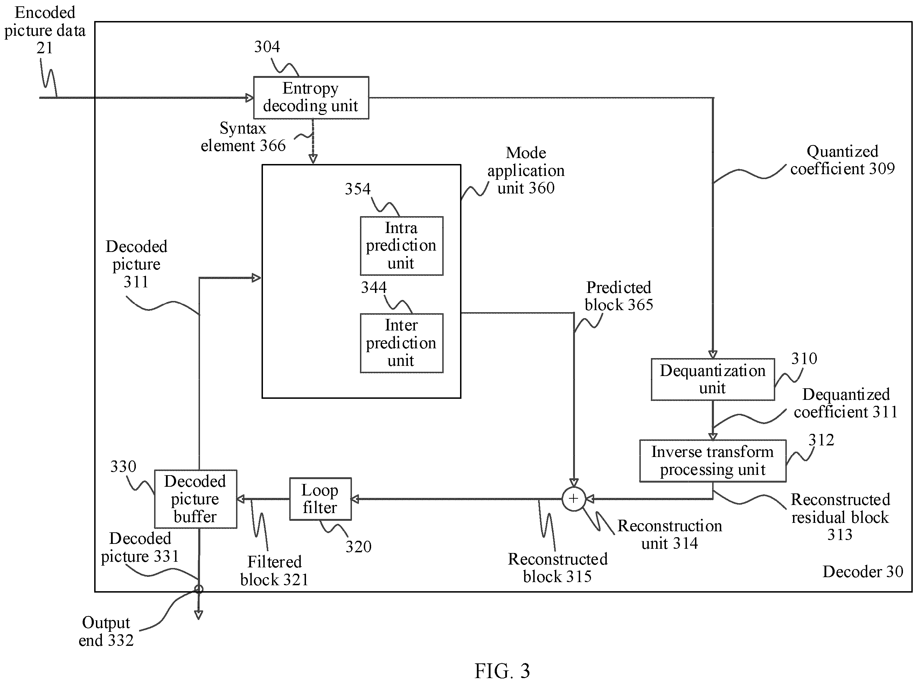

The video decoder (or decoder) 30 is configured to receive the encoded picture data 21 and provide decoded picture data (or decoded picture data) 31 (further descriptions are provided below based on FIG. 3 and the like).

The post-processor 32 is configured to post-process the decoded picture data 31 (also referred to as reconstructed picture data) such as a decoded picture, to obtain post-processed picture data 33 such as a post-processed picture. Post-processing performed by the post-processing unit 32 may include, for example, color format conversion (for example, conversion from YCbCr to RGB), color correction, trimming, re-sampling, or any other processing for generating the decoded picture data 31 for display by, for example, the display device 34.

The display device 34 is configured to receive the post-processed picture data 33 for displaying the picture to a user, a viewer, or the like. The display device 34 may be or include any type of display for representing a reconstructed picture, for example, an integrated or external display screen or display. For example, the display screen may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any other type of display screen

The coding system 10 further includes a training engine 25. The training engine 25 is configured to train the encoder 20 (especially an entropy encoding unit 270 in the encoder 20) or the decoder 30 (especially an entropy decoding unit 304 in the decoder 30), to perform entropy encoding on a to-be-encoded picture block based on estimated probability distribution obtained through estimation. For detailed descriptions of the training engine 25, refer to the following method embodiments.

Although FIG. 1a shows the source device 12 and the destination device 14 as separate devices, device embodiments may include both the source device 12 and the destination device 14, or include functions of both the source device 12 and the destination device 14, that is, include both the source device 12 or the corresponding function and the destination device 14 or the corresponding function. In these embodiments, the source device 12 or the corresponding function and the destination device 14 or the corresponding function may be implemented by using same hardware and/or software or by using separate hardware and/or software or any combination thereof.

According to the descriptions, existence and (accurate) splitting of different units or functions of the source device 12 and/or the destination device 14 shown in FIG. 1a may vary with an actual device and application. It is clear for a skilled person.

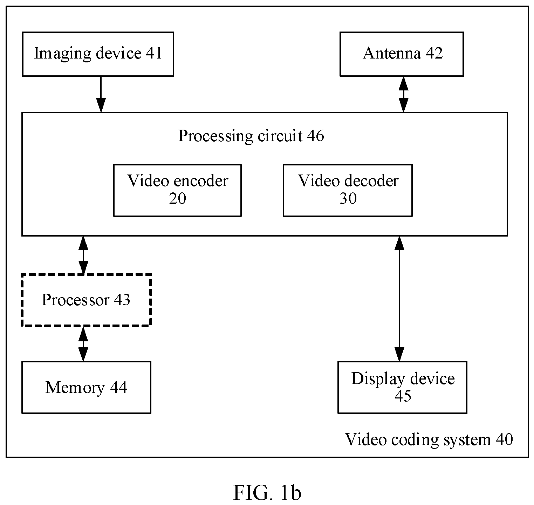

FIG. 1b is an example block diagram of a video coding system 40 according to an embodiment of this application. An encoder 20 (for example, a video encoder 20) or a decoder 30 (for example, a video decoder 30) or both may be implemented by using a processing circuit in the video coding system 40 shown in FIG. 1b, for example, one or more microprocessors, a digital signal processor (digital signal processor, DSP), an application-specific integrated circuit (application-specific integrated circuit, ASIC), a field programmable gate array (field programmable gate array, FPGA), discrete logic, hardware, video encoding dedicated processor, or any combination thereof. FIG. 2 is an example block diagram of a video encoder according to an embodiment of this application, and FIG. 3 is an example block diagram of a video decoder according to an embodiment of this application. The encoder 20 may be implemented by using a processing circuit 46 to include various modules discussed with reference to the encoder 20 in FIG. 2 and/or any other encoder system or subsystem described in this specification. The decoder 30 may be implemented by using a processing circuit 46 to include various modules discussed with reference to the decoder 30 in FIG. 3 and/or any other decoder system or subsystem described in this specification. The processing circuit 46 may be configured to perform various operations discussed below. As shown in FIG. 5, if some technologies are implemented in software, a device may software instructions in an appropriate non-transitory computer-readable storage medium and may execute the instructions in hardware by using one or more processors to perform the technologies in embodiments of this application. Either of the video encoder 20 and the video decoder 30 may be integrated as a part of a combined encoder/decoder (encoder/decoder, CODEC) in a single device, as shown in FIG. 1b.

The source device 12 and the destination device 14 may include any one of various devices, including any type of handheld or stationary devices, for example, notebook or laptop computers, mobile phones, smartphones, tablets or tablet computers, cameras, desktop computers, set-top boxes, televisions, display devices, digital media players, video gaming consoles, video streaming devices (such as content service servers or content delivery servers), broadcast receiver devices, broadcast transmitter devices, or monitoring devices, and may not use or use any type of operating system. The source device 12 and the destination device 14 may alternatively be devices in a cloud computing scenario, for example, virtual machines in the cloud computing scenario. In some cases, the source device 12 and the destination device 14 may be equipped with components for wireless communication. Therefore, the source device 12 and the destination device 14 may be wireless communication devices.

Virtual scene applications (applications, APPs) such as virtual reality (virtual reality, VR) applications, augmented reality (augmented reality, AR) applications, or mixed reality (mixed reality, MR) applications may be installed on the source device 12 and the destination device 14, and the VR application, the AR application, or the MR application may be run based on a user operation (for example, tapping, touching, sliding, shaking, or voice control). The source device 12 and the destination device 14 may capture pictures/videos of any object in an environment by using a camera and/or a sensor, and then display a virtual object on a display device based on the captured pictures/videos. The virtual object may be a virtual object (that is, an object in a virtual environment) in a VR scenario, an AR scenario, or an MR scenario.

It should be noted that, in this embodiment of this application, the virtual scene applications in the source device 12 and the destination device 14 may be built-in applications of the source device 12 and the destination device 14, or may be applications provided by a third-party service provider and installed by a user. This is not specifically limited herein.

In addition, real-time video transmission applications, such as live broadcast applications, may be installed on the source device 12 and the destination device 14. The source device 12 and the destination device 14 may capture pictures/videos by using the camera, and then display the captured pictures/videos on the display device.

In some cases, the video coding system 10 shown in FIG. 1a is merely an example and the technologies provided in embodiments of this application are applicable to video encoding settings (for example, video encoding or video decoding). These settings do not necessarily include any data communication between an encoding device and a decoding device. In another example, data is retrieved from a local memory, and sent through a network. A video encoding device may encode data and store the data in a memory, and/or a video decoding device may retrieve data from a memory and decode the data. In some examples, encoding and decoding are performed by devices that do not communicate with each other, but simply encode data into a memory and/or retrieve data from the memory and decode the data.

FIG. 1b is an example block diagram of a video coding system 40 according to an embodiment of this application. As shown in FIG. 1b, the video coding system 40 may include an imaging device 41, a video encoder 20, a video decoder 30 (and/or a video encoder/decoder implemented by using a processing circuit 46), an antenna 42, one or more processors 43, one or more memories 44, and/or a display device 45.

As shown in FIG. 1b, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)), or a non-volatile memory (for example, a flash memory). In a non-limitative example, the memory 44 may be implemented by using a cache memory. In another example, the processing circuit 46 may include a memory (for example, a cache) configured to implement a picture buffer.

In some examples, the video encoder 20 implemented by using a logic circuit may include a picture buffer (implemented by using, for example, the processing circuit 46 or the memory 44) and a graphics processing unit (implemented by using, for example, the processing circuit 46). The graphics processing unit may be communicatively coupled to the picture buffer. The graphics processing unit may be included in the video encoder 20 implemented by using the processing circuit 46 to implement various modules discussed with reference to FIG. 2 and/or any other encoder system or subsystem described in this specification. The logic circuit may be configured to perform various operations discussed in this specification.

In some examples, the video decoder 30 may be implemented by using the processing circuit 46 in a similar manner, to implement various modules discussed with reference to the video decoder 30 in FIG. 3 and/or any other decoder system or subsystem described in this specification. In some examples, the video decoder 30 implemented by using a logic circuit may include a picture buffer (implemented by using the processing circuit 46 or the memory 44) and a graphics processing unit (implemented by using, for example, the processing circuit 46). The graphics processing unit may be communicatively coupled to the picture buffer. The graphics processing unit may be included in the video decoder 30 implemented by using the processing circuit 46, to implement various modules discussed with reference to FIG. 3 and/or any other decoder system or subsystem described in this specification.

In some examples, the antenna 42 may be configured to receive an encoded bitstream of video data. As discussed, the encoded bitstream may include data, an indicator, an index value, mode selection data, or the like related to video frame encoding discussed in this specification, for example, data related to coding partitioning (for example, a transform coefficient or a quantized transform coefficient, an optional indicator (as discussed), and/or data for defining the coding partitioning). The video coding system 40 may further include the video decoder 30 that is coupled to the antenna 42 and that is configured to decode the encoded bitstream. The display device 45 is configured to present a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may perform entropy encoding on the syntax element to obtain an encoded video bitstream. In such examples, the video decoder 30 may parse such a syntax element and correspondingly decode the related video data.

For ease of description, embodiments of this application are described with reference to versatile video coding (versatile video coding, VVC) reference software or high-efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). A person of ordinary skill in the art understands that embodiments of this application are not limited to HEVC or VVC.

Encoder and encoding method

As shown in FIG. 2, the video encoder 20 includes an input end (or input interface) 201, a residual calculation unit 204, a transform processing unit 206, a quantization unit 208, a dequantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254, and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

Refer to FIG. 2. The inter prediction unit is a trained target model (also referred to as a neural network), and the neural network is used to process an input picture, picture region, or picture block, to generate a predictor of the input picture block. For example, a neural network for inter prediction is used to receive an input picture, picture region, or picture block, and generate a predictor of the input picture, picture region, or picture block.

The residual calculation unit 204, the transform processing unit 206, the quantization unit 208, and the mode selection unit 260 form a forward signal path of the encoder 20, and the dequantization unit 210, the inverse transform processing unit 212, the reconstruction unit 214, the buffer 216, the loop filter 220, the decoded picture buffer (decoded picture buffer, DPB) 230, the inter prediction unit 244, and the intra prediction unit 254 form a backward signal path of the encoder. The backward signal path of the encoder 20 corresponds to a signal path of the decoder (refer to the decoder 30 in FIG. 3). The dequantization unit 210, the inverse transform processing unit 212, the reconstruction unit 214, the loop filter 220, the decoded picture buffer 230, the inter prediction unit 244, and the intra prediction unit 254 further form a "built-in decoder" of the video encoder 20.

Picture and picture partitioning (picture and block)

The encoder 20 may be configured to receive, through the input end 201 or the like, a picture (or picture data) 17, for example, a picture in a picture sequence that forms a video or a video sequence. The received picture or picture data may be a preprocessed picture (or preprocessed picture data) 19. For ease of simplicity, the picture 17 is used in the following descriptions. The picture 17 may also be referred to as a current picture or a to-be-encoded picture (especially, in video encoding, when the current picture is distinguished from another picture, the another picture is, for example, a previously encoded picture and/or a previously decoded picture in a same video sequence, that is, a video sequence that also includes the current picture).

A (digital) picture is or may be considered as a two-dimensional array or matrix including pixels with intensity values. The pixel in the array may also be referred to as a pixel (pixel or pel) (short for a picture element). A quantity of pixels of the array or the picture in horizontal and vertical directions (or axes) determines a size and/or resolution of the picture. For representation of colors, three color components are usually used. To be specific, the picture may be represented as or include three pixel arrays. In an RBG format or RBG color space, the picture includes corresponding red, green, and blue pixel arrays. However, in the video encoding, each pixel is usually represented in a luminance/chrominance format or luminance/chrominance color space, for example, YCbCr, that includes a luminance component indicated by Y (or sometimes represented by L) and two chrominance components represented by Cb and Cr. The luminance (luma) component Y represents brightness or gray level intensity (for example, brightness and gray level intensity are the same in a gray-scale picture), and the two chrominance (chrominance, chroma for short) components Cb and Cr represent chrominance or color information components. Correspondingly, a picture in a YCbCr format includes a luminance pixel array of luminance pixel values (Y), and two chrominance pixel arrays of chrominance values (Cb and Cr). A picture in the RGB format may be converted or transformed into the YCbCr format, and vice versa. The process is also referred to as color transform or conversion. If a picture is monochrome, the picture may include only a luminance pixel array. Correspondingly, a picture may be, for example, a luminance pixel array in a monochrome format or a luminance pixel array and two corresponding chrominance pixel arrays in 4:2:0, 4:2:2, and 4:4:4 color formats.

In an embodiment, an embodiment of the video encoder 20 may include a picture partitioning unit (not shown in FIG. 2) configured to partition the picture 17 into a plurality of (usually non-overlapping) picture blocks 203. These blocks may also be referred to as root blocks, macro blocks (in H.264/AVC), coding tree blocks (coding tree blocks, CTBs), or coding tree units (coding tree units, CTUs) in H.265/HEVC and VVC standards. The partitioning unit may be configured to use a same block size for all pictures in the video sequence and use a corresponding grid defining the block size, or change a block size between pictures or picture subsets or picture groups, and partition each picture into corresponding blocks.

In another embodiment, the video encoder may be configured to directly receive a block 203 of the picture 17, for example, one, several, or all blocks forming the picture 17. The picture block 203 may also be referred to as a current picture block or a to-be-encoded picture block.

Like the picture 17, the picture block 203 is also or may be considered as a two-dimensional array or matrix including pixels with intensity values (pixel values), but the picture block 203 is smaller than the picture 17. In other words, the block 203 may include one pixel array (for example, a luminance array in the case of a monochrome picture 17, or a luminance or chrominance array in the case of a color picture), three pixel arrays (for example, one luminance array and two chrominance arrays in the case of a color picture 17), or any other quantity and/or type of arrays based on a used color format. A quantity of pixels of the block 203 in the horizontal and vertical directions (or axes) define a size of the block 203.

Correspondingly, a block may be an M×N (M columns × N rows) array of pixels, an M×N array of transform coefficients, or the like.

In an embodiment, the video encoder 20 shown in FIG. 2 may be configured to encode the picture 17 block by block, for example, encode and predict each block 203.

In an embodiment, the video encoder 20 shown in FIG. 2 may be further configured to partition and/or encode the picture by using a slice (also referred to as a video slice), where the picture may be partitioned or encoded by using one or more (usually non-overlapping) slices. Each slice may include one or more blocks (for example, coding tree units CTUs) or one or more block groups (for example, tiles (tiles) in the H.265/HEVC/VVC standard and bricks (bricks) in the VVC standard).

In an embodiment, the video encoder 20 shown in FIG. 2 may be further configured to partition and/or encode the picture by using a slice/tile group (also referred to as a video tile group) and/or a tile (also referred to as a video tile). The picture may be partitioned or encoded by using one or more (usually non-overlapping) slices/tile groups, each slice/tile group may include one or more blocks (for example, CTUs), one or more tiles, or the like, and each tile may have a rectangular shape or another shape, and may include one or more complete or fractional blocks (for example, CTUs).

Residual calculation

The residual calculation unit 204 is configured to calculate a residual block 205 based on the picture block (or an original block) 203 and a predicted block 265 (the predicted block 265 is described in detail subsequently), for example, obtain the residual block 205 in pixel domain by subtracting a pixel value of the predicted block 265 from a pixel value of the picture block 203 pixel by pixel (pixel by pixel).

Transform

The transform processing unit 206 is configured to perform discrete cosine transform (discrete cosine transform, DCT), discrete sine transform (discrete sine transform, DST), or the like on a pixel value of the residual block 205, to obtain a transform coefficient 207 in transform domain. The transform coefficient 207 may also be referred to as a transform residual coefficient and represents the residual block 205 in transform domain.

The transform processing unit 206 may be configured to perform integer approximation of DCT/DST, for example, transform specified in HEVC/H.265. Compared with orthogonal DCT transform, such integer approximation is usually performed to scale based on a factor. To preserve a norm of a residual block that is processed through forward transform and inverse transform, another scale factor is used as a part of a transform process. The scale factor is usually selected based on some constraints. For example, the scale factor is a power of 2 for a shift operation, a bit depth of the transform coefficient, or a tradeoff between accuracy and implementation costs. For example, a specific scale factor is specified for inverse transform through the inverse transform processing unit 212 on a side of the encoder 20 (and corresponding inverse transform through the inverse transform processing unit 312 on a side of the decoder 30), and correspondingly, a corresponding scale factor may be specified for forward transform through the transform processing unit 206 on the side of the encoder 20.

In an embodiment, the video encoder 20 (correspondingly, the transform processing unit 206) may be configured to output a transform parameter such as one or more transform types, for example, directly output the transform parameter or output the transform parameter after the transform parameter is encoded or compressed by the entropy encoding unit 270, so that, for example, the video decoder 30 may receive and use the transform parameter for decoding.

Quantization

The quantization unit 208 is configured to quantify the transform coefficient 207 through, for example, scalar quantization or vector quantization, to obtain a quantized transform coefficient 209. The quantized transform coefficient 209 may also be referred to as a quantized residual coefficient 209.

Through a quantization process, a bit depth related to some or all transform coefficients 207 can be reduced. For example, an n-bit transform coefficient may be rounded down to an m-bit transform coefficient during quantization, where n is greater than m. A quantization degree may be changed by adjusting a quantization parameter (quantization parameter, QP). For example, for the scalar quantization, different proportions may be used to implement finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index of a predefined set of appropriate quantization step sizes. For example, a smaller quantization parameter may correspond to finer quantization (a smaller quantization step size), and a larger quantization parameter may correspond to coarser quantization (a larger quantization step size); or vice versa. The quantization may include division by a quantization step size, and corresponding dequantization performed by the dequantization unit 210 or the like may include multiplication by the quantization step size. In embodiments according to some standards such as HEVC, a quantization parameter may be used to determine the quantization step size. Generally, the quantization step size may be calculated based on the quantization parameter and through fixed point approximation of an equation including division. Other scale factors may be introduced for quantization and dequantization to restore a norm of a residual block that may be changed because of a proportion used in the fixed point approximation of the equation for the quantization step size and the quantization parameter. In an example implementation, proportions for inverse transform and dequantization may be combined. Alternatively, a customized quantization table may be used and indicated from the encoder to the decoder in a bitstream or the like. The quantization is a lossy operation. A larger quantization step size indicates a higher loss.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

Dequantization

The dequantization unit 210 is configured to perform dequantization of the quantization unit 208 on the quantized coefficient to obtain a dequantized coefficient 211, for example, perform, based on or by using a quantization step size the same as that of the quantization unit 208, a dequantization scheme of a quantization scheme performed by the quantization unit 208. The dequantized coefficient 211 may also be referred to as dequantized residual coefficient 211 and corresponds to the transform coefficient 207. However, due to the loss caused by the quantization, the dequantized coefficient 211 is usually not exactly the same as the transform coefficient.

Inverse transform

The inverse transform processing unit 212 is configured to perform inverse transform of transform performed by the transform processing unit 206, for example, inverse discrete cosine transform (discrete cosine transform, DCT) or inverse discrete sine transform (discrete sine transform, DST), to obtain a reconstructed residual block 213 (or a corresponding dequantized coefficient 213) in pixel domain. The reconstructed residual block 213 may also be referred to as a transform block 213.

Reconstruction

The reconstruction unit 214 (for example, a summator 214) is configured to add the transform block 213 (that is, the reconstructed residual block 213) to the predicted block 265 to obtain the reconstructed block 215 in pixel domain, for example, add a pixel value of the reconstructed residual block 213 and a pixel value of the predicted block 265.

Filtering

A loop filter unit 220 (also referred to as the "loop filter" 220 for short) is configured to filter the reconstructed block 215 to obtain a filtered block 221, or usually configured to filter a reconstructed pixel to obtain a filtered pixel value. For example, the loop filter unit is configured to perform smooth pixel conversion or improve video quality. The loop filter unit 220 may include one or more loop filters such as a de-blocking filter, a sample-adaptive offset (sample-adaptive offset, SAO) filter, or one or more other filters such as an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. A sequence of a filtering process may be the de-blocking filter, the SAO filter, and the ALF filter. For another example, a process referred to as luminance mapping with chrominance scaling (luma mapping with chroma scaling, LMCS) (that is, an adaptive in-loop reshaper) is added. This process is performed before de-blocking. For another example, a de-blocking filtering process may alternatively be performed on an internal sub-block edge, for example, an affine sub-block edge, an ATMVP sub-block edge, a sub-block transform (sub-block transform, SBT) edge, or an intra sub-partition (intra sub-partition, ISP) edge. Although the loop filter unit 220 is shown as the loop filter in FIG. 2, in another configuration, the loop filter unit 220 may be implemented as a post loop filter. The filtered block 221 may also be referred to as a filtered reconstructed block 221.

In an embodiment, the video encoder 20 (correspondingly, the loop filter unit 220) may be configured to output a loop filter parameter (for example, a SAO filter parameter, an ALF filter parameter, or an LMCS parameter), for example, directly output the loop filter parameter or output the loop filter parameter after entropy encoding is performed on the loop filter parameter by the entropy encoding unit 270, so that, for example, the decoder 30 may receive and use a same loop filter parameter or different loop filter parameters for decoding.

Decoded picture buffer

The decoded picture buffer (decoded picture buffer, DPB) 230 may be a reference picture memory that stores reference picture data for use by the video encoder 20 during video data encoding. The DPB 230 may be formed by any one of a plurality of memory devices such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of storage device. The decoded picture buffer 230 may be configured to store one or more filtered blocks 221. The decoded picture buffer 230 may be further configured to store other previously filtered blocks, for example, previously reconstructed and filtered blocks 221, of a same current picture or different pictures such as previously reconstructed pictures, and may provide complete previously reconstructed, that is, decoded, pictures (and corresponding reference blocks and pixels) and/or a partially reconstructed current picture (and a corresponding reference block and pixel), for, for example, inter prediction. The decoded picture buffer 230 may be further configured to store one or more unfiltered reconstructed blocks 215, or generally store unfiltered reconstructed pixels, for example, the reconstructed block 215 that is not filtered by the loop filter unit 220, or a reconstructed block or a reconstructed pixel on which no any other processing is performed.

Mode selection (partitioning and prediction)

The mode selection unit 260 includes the partitioning unit 262, the inter prediction unit 244, and the intra prediction unit 254, and is configured to receive or obtain original picture data such as the original block 203 (the current block 203 of the current picture 17) and the reconstructed picture data, for example, a filtered and/or unfiltered reconstructed pixel or reconstructed block of a same picture (the current picture) and/or one or more previously decoded pictures, from the decoded picture buffer 230 or another buffer (for example, a column buffer, not shown in FIG. 2). The reconstructed picture data is used as reference picture data required for prediction such as inter prediction or intra prediction, to obtain a predicted block 265 or a predictor 265.

The mode selection unit 260 may be configured to determine or select a partitioning manner for the current block (including non-partitioning) and a prediction mode (for example, an intra or inter prediction mode) and generate a corresponding predicted block 265, to calculate the residual block 205 and reconstruct the reconstructed block 215.

In an embodiment, the mode selection unit 260 may be configured to select partitioning and prediction modes (for example, from prediction modes supported by or available to the mode selection unit 260). The prediction mode provides best matching or a minimum residual (the minimum residual means better compression for transmission or storage) or provides minimum signaling overheads (the minimum signaling overheads mean better compression for transmission or storage), or a minimum residual and minimum signaling overheads are considered or balanced in the prediction mode. The mode selection unit 260 may be configured to determine partitioning and prediction modes based on rate distortion optimization (rate distortion Optimization, RDO), that is, select a prediction mode that provides minimum rate distortion optimization. The terms such as "best", "lowest", and "optimal" in this specification do not necessarily mean "best", "lowest", and "optimal" in general, but may refer to cases in which termination or selection criteria are met. For example, values that exceed or fall below a threshold or other restrictions may result in "suboptimal selection" but reduce complexity and processing time.

In other words, the partitioning unit 262 may be configured to partition a picture in a video sequence into a sequence of coding tree units (coding tree units, CTUs), and the CTU 203 may be further partitioned into smaller block parts or sub-blocks (that form blocks again), for example, iteratively perform quad-tree partitioning (quad-tree partitioning, QT), binary-tree partitioning (binary-tree partitioning, BT) or triple-tree partitioning (triple-tree partitioning, TT) or any combination thereof, and for example, predict each of the block parts or the sub-blocks, where mode selection includes selection of a tree structure of the partitioned block 203 and a prediction mode applied to each of the block parts or the sub-blocks.

Partitioning performed by the video encoder 20 (for example, performed by the partitioning unit 262) and prediction processing (for example, performed by the inter prediction unit 244 and the intra prediction unit 254) are described in detail below.

Partitioning

The partitioning unit 262 may partition (or split) one picture block (or CTU) 203 into smaller parts, for example, square or rectangular small blocks. For a picture that has three pixel arrays, one CTU includes a block of $N \times N$ luminance pixels and two corresponding chrominance pixel blocks. A maximum allowed size of a luminance block in the CTU is specified to be $128 \times 128$ in the developing versatile video coding (versatile video coding, VVC) standard, but may be specified to be a value different from $128 \times 128$ in the future, for example, $256 \times 256$. CTUs of a picture may be concentrated/grouped into slices/tile groups, tiles, or bricks. One tile covers a rectangular region of one picture, and one tile may be divided into one or more bricks. One brick includes a plurality of CTU rows in one tile. A tile that is not partitioned into a plurality of bricks may be referred to as a brick. However, a brick is a true subset of a tile and therefore is not referred to as a tile. Two modes of tile groups, that is, a raster-scan slice/tile group mode and a rectangular slice mode, are supported in VVC. In the raster-scan tile group mode, one slice/tile group includes a sequence of tiles in tile raster scan of one picture. In the rectangular slice mode, a slice includes a plurality of bricks of one picture, and the bricks collectively form a rectangular region of the picture. Bricks in a rectangular slice are arranged in an order of brick raster scan of the slice. These small blocks (which may also be referred to as sub-blocks) may be further partitioned into even smaller part. This is also referred to as tree partitioning or hierarchical tree partitioning. A root block, for example, at root tree level 0 (hierarchy level 0, and depth 0) may be recursively partitioned into two or more blocks at a next lower tree level, for example, nodes at tree level 1 (hierarchy level 1, and depth 1). These blocks may be further partitioned into two or more blocks at a next lower level, for example, tree level 2 (hierarchy level 2, and depth 2), until the partitioning is terminated (because a termination criterion is met, for example, a maximum tree depth or a minimum block size is reached). Blocks that are not further partitioned are also referred to as leaf blocks or leaf nodes of a tree. A tree partitioned into two parts is referred to as a binary tree (binary tree, BT), a tree partitioned into three parts is referred to as a ternary tree (ternary tree, TT), and a tree partitioned into four parts is referred to as a quad tree (quad tree, QT).

For example, a coding tree unit (CTU) may be or include a CTB of luminance pixels, two corresponding CTBs of chrominance pixels of a picture that has three pixel arrays, a CTB of pixels of a monochrome picture, or a CTB of pixels of a picture that is encoded by using three separate color planes and syntax structures (used to encode the pixels). Correspondingly, a coding tree block (CTB) may be a block of $N \times N$ pixels. N may be set to a specific value to obtain a CTB through splitting for a component. This is partitioning. A coding unit (coding unit, CU) may be or include a coding block of luminance pixels, two corresponding coding blocks of chrominance pixels of a picture that has three pixel arrays, a coding block of pixels of a monochrome picture, or a coding block of pixels of a picture that is encoded by using three separate color planes and syntax structures (used to encode the pixels). Correspondingly, a coding block (CB) may be a block of $M \times N$ pixels. M and N may be set to specific values to split a CTB into coding blocks. This is partitioning.

For example, in an embodiment, a coding tree unit (CTU) may be split into a plurality of CUs by using a quad-tree structure represented as a coding tree and according to HEVC. Whether to encode a picture region through inter (temporal) prediction or intra (spatial) prediction is determined at a leaf CU level. Each leaf CU may be further split into one PU, two PUs, or four PUs based on a PU split type. A same prediction process is performed in one PU, and related information is transmitted to the decoder in a unit of a PU. After obtaining the residual block through the prediction process based on the PU split type, a leaf CU may be partitioned into transform units (TUs) based on another quad-tree structure similar to the coding tree for the CU.

For example, in an embodiment, according to the developing latest video coding standard (referred to as versatile video coding (VVC)), a combined quad tree of nested multi-type trees (such as a binary tree and a ternary tree) is used to split a segmented structure for partitioning coding tree units. In a coding tree structure in a coding tree unit, a CU may be square or rectangular. For example, the coding tree unit (CTU) is first partitioned by a quad tree. A quad-tree leaf node is further partitioned by a multi-type tree structure. There are four split types for multi-type tree structures: vertical binary-tree split (SPLIT_BT_VER), horizontal binary-tree split (SPLIT_BT_HOR), vertical triple-tree split (SPLIT_TT_VER), and horizontal triple-tree split (SPLIT_TT_HOR). Multi-type tree leaf nodes are referred to as coding units (CUs). Such segmentation is used for prediction and transform processing without any other partitioning, unless the CU is excessively large for a maximum transform length. This means that, in most cases, the CU, the PU, and the TU have a same block size in a coding block structure in which a quad tree is nested with multi-type trees. An exception occurs when a maximum supported transform length is less than a width or a height of a color component of the CU. A unique signaling mechanism of partitioning or splitting information in the coding structure in which the quad tree is nested with the multi-type trees is formulated in VVC. In the signaling mechanism, a coding tree unit (CTU) is used as a root of a quad tree and is first partitioned by a quad-tree structure. Each quad-tree leaf node (when being sufficiently large) is then further partitioned by a multi-type tree structure. In the multi-type tree structure, a first flag (mtt_split_cu_flag) indicates whether to further partition the node; and when the node is further partitioned, first, a second flag (mtt_split_cu_vertical_flag) indicates a split direction, and then a third flag (mtt_split_cu_binary_flag) indicates whether the split is binary-tree split or ternary-tree split. Based on values of mtt_split_cu_vertical_flag and mtt_split_cu_binary_flag, the decoder may derive a multi-type tree split mode (MttSplitMode) of the CU based on a predefined rule or table. It should be noted, for a specific design, for example, a $64 \times 64$ luminance block and $32 \times 32$ chrominance pipeline design in a VVC hardware decoder, TT split is forbidden when a width or a height of a luminance coding block is greater than 64. TT split is also forbidden when a width or a height of a chrominance coding block is greater than 32. In the pipeline design, a picture is split into a plurality of virtual pipeline data units (virtual pipeline data units, VPDUs), and the VPDUs are defined as non-overlapping units in the picture. In the hardware decoder, consecutive VPDUs are simultaneously processed in a plurality of pipeline stages. A VPDU size is roughly proportional to a buffer size in most pipeline stages. Therefore, a small VPDU size needs to be kept. In most hardware decoders, the VPDU size may be set to a maximum transform block (transform block, TB) size. However, in VVC, ternary-tree (TT) partitioning and binary-tree (BT) partitioning may cause an increase in the VPDU size.

In addition, it should be noted that, when a part of a tree node block exceeds the bottom or a right picture boundary, the tree node block is forced to be split, until all pixels of each coding CU are located inside the picture boundary.

For example, an intra sub-partition (intra sub-partition, ISP) tool may split a luminance intra predicted block vertically or horizontally into two or four sub-parts based on a block size.

In an example, the mode selection unit 260 in the video encoder 20 may be configured to perform any combination of the partitioning technologies described above.

As described above, the video encoder 20 is configured to determine or select a best prediction mode or an optimal prediction mode from a (pre-determined) prediction mode set. The prediction mode set may include, for example, an intra prediction mode and/or an inter prediction mode.

Intra prediction

An intra prediction mode set may include 35 different intra prediction modes, for example, non-directional modes such as a DC (or average) mode and a planar mode or directional modes such as those defined in HEVC, or may include 67 different intra prediction modes, for example, non-directional modes such as a DC (or average) mode and a planar mode or directional modes such as those defined in VVC. For example, several conventional angular intra prediction modes are adaptively replaced with wide-angle intra prediction modes for non-square blocks defined in VVC. For another example, to avoid a division operation for DC prediction, only a longer side is used to calculate an average for non-square blocks. In addition, an intra prediction result in the planar mode may be changed by using a position dependent intra prediction combination (position dependent intra prediction combination, PDPC) method.

The intra prediction unit 254 is configured to use reconstructed pixels of neighboring blocks of a same current picture in the intra prediction mode in the intra prediction mode set, to generate an intra predicted block 265.

The intra prediction unit 254 (or usually the mode selection unit 260) is further configured to output an intra prediction parameter (or usually information indicating a selected intra prediction mode for a block) to be sent to the entropy encoding unit 270 in a form of a syntax element 266, to be included in the encoded picture data 21, so that the video decoder 30 may perform an operation, for example, receive and use a prediction parameter for decoding.

Intra prediction modes in HEVC include a direct current prediction mode, a planar prediction mode, and 33 angular prediction modes. That is, there are 35 candidate prediction modes in total. A current block may use pixels of reconstructed picture blocks on left and upper sides as a reference to perform intra prediction. A picture block that is in a surrounding region of the current block and that is used to perform intra prediction on the current block becomes a reference block, and a pixel in the reference block is referred to as a reference pixel. In the 35 candidate prediction modes, the direct current prediction mode is applicable to a region whose texture is flat in the current block, and all pixels in the region use an average of reference pixels in the reference block for prediction;

the planar prediction mode is applicable to a picture block whose texture changes smoothly, and for the current block that meets the condition, bilinear interpolation is performed by using the reference pixel in the reference block for prediction of all pixels in the current block; and in the angular prediction mode, a value of a reference pixel in a corresponding reference block is copied along an angle for prediction of all pixels in the current block by using a feature that texture of the current block is highly correlated with texture of a neighboring reconstructed picture block.

An HEVC encoder selects an optimal intra prediction mode from the 35 candidate prediction modes for the current block, and writes the optimal intra prediction mode into a video bitstream. To improve encoding efficiency for intra prediction, the encoder/decoder derives three most possible modes from respective optimal intra prediction modes of reconstructed picture blocks for which intra prediction is performed in a surrounding region. If the optimal intra prediction mode selected for the current block is one of the three most possible modes, a first index is encoded to indicate that the selected optimal intra prediction mode is one of the three most possible modes. If the selected optimal intra prediction mode is not one of the three most possible modes, a second index is encoded to indicate that the selected optimal intra prediction mode is one of the other 32 modes (modes other than the foregoing three most possible modes in the 35 candidate prediction modes). The HEVC standard uses a 5-bit fixed-length code as the foregoing second index.

A method for deriving the three most possible modes by the HEVC encoder includes: selecting optimal intra prediction modes of a left neighboring picture block and an upper neighboring picture block of the current block, and putting the optimal intra prediction modes in a set; if the two optimal intra prediction modes are the same, retaining only one intra prediction mode in the set; and if the two optimal intra prediction modes are the same and both are angular prediction modes, further selecting two angular prediction modes adjacent to an angle direction and adding the modes to the set; otherwise, sequentially selecting the planar prediction mode, the direct current mode, and a vertical prediction mode and adding the modes to the set, until a quantity of modes in the set reaches 3.

After performing entropy decoding on the bitstream, the HEVC decoder obtains mode information of the current block. The mode information includes an indicator indicating whether the optimal intra prediction mode of the current block is in the three most possible modes and an index of the optimal intra prediction mode of the current block in the three most possible modes or an index of the optimal intra prediction mode of the current block in the other 32 modes.

Inter prediction

In a possible implementation, an inter prediction mode set depends on an available reference picture (for example, a picture that is at least partially decoded previously and that is stored in the DBP 230) and another inter prediction parameter, for example, depend on whether to use the entire reference picture or only a part of the reference picture, such as a search window region near a region of the current block, to search for a best matching reference block, and/or for example, depend on whether to perform half-pixel interpolation, quarter-pixel interpolation, and/or 1/16-pixel interpolation.

In addition to the foregoing prediction modes, a skip mode and/or a direct mode may be used.

For example, a merge candidate list in an extended merge prediction mode includes the following five candidate types in sequence: spatial MVP of spatially neighboring CUs, temporal MVP of collocated CUs, history-based MVP of a FIFO table, pairwise average MVP, and zero MVs. Decoder side motion vector refinement (decoder side motion vector refinement, DMVR) based on bilateral matching may be performed to increase accuracy of an MV in the merge mode. A merge mode with MVD (merge mode with MVD, MMVD) is a merge mode with motion vector difference. An MMVD flag is sent immediately after a skip flag and a merge flag are sent, to specify whether the MMVD mode is used for a CU. A CU-level adaptive motion vector resolution (adaptive motion vector resolution, AMVR) scheme may be used. AMVR supports encoding of an MVD of the CU at different precision. The MVD of the current CU may be adaptively selected based on a prediction mode of the current CU. When the CU is encoded in the merge mode, a combined inter/intra prediction (combined inter/intra prediction, CIIP) mode may be applied to the current CU. Weighted averaging is performed on inter and intra prediction signals to achieve CIIP prediction. For affine motion compensation prediction, an affine motion field of a block is described by using motion information of a motion vector of two control points (four parameters) or three control points (six parameters). Sub-block-based temporal motion vector prediction (sub-block-based temporal motion vector prediction, SbTMVP) is similar to temporal motion vector prediction (temporal motion vector prediction, TMVP) in HEVC, but is to predict a motion vector of a sub-CU in the current CU. A bi-directional optical flow (bi-directional optical flow, BDOF), previously referred to as a BIO, is a simplified version that requires less computation, especially in terms of a quantity of multiplications and a value of a multiplier. In a triangulation mode, a CU is evenly split into two triangular parts in two split manners: diagonal split and anti-diagonal split. In addition, a bi-directional prediction mode is extended on the basis of simple averaging to support weighted averaging of two prediction signals.

The inter prediction unit 244 may include a motion estimation (motion estimation, ME) unit and a motion compensation (motion compensation, MC) unit (both are not shown in FIG. 2). The motion estimation unit may be configured to receive or obtain the picture block 203 (the current picture block 203 of the current picture 17) and a decoded picture 231, or at least one or more previously reconstructed blocks, for example, a reconstructed block of one or more other/different previously decoded pictures 231 for motion estimation. For example, a video sequence may include a current picture and a previously decoded picture 231; in other words, the current picture and the previously decoded picture 231 may be a part of a picture sequence that forms the video sequence or form the picture sequence.

For example, the encoder 20 may be configured to select a reference block from a plurality of reference blocks of a same picture or different pictures in a plurality of other pictures, and provide a reference picture (or a reference picture index) and/or an offset (a spatial offset) between a position (x and y coordinates) of a reference block and a position of a current block as an inter prediction parameter to the motion estimation unit. This offset is also referred to as a motion vector (motion vector, MV).

The motion compensation unit is configured to obtain, for example, receive, an inter prediction parameter and perform inter prediction based on or by using the inter prediction parameter, to obtain an inter predicted block 246. Motion compensation, performed by the motion compensation unit, may include extracting or generating a predicted block based on a motion/block vector determined through motion estimation, and may further include performing interpolation at sub-pixel precision. Interpolation filtering may be performed to generate a pixel of another pixel from a pixel of a known pixel, to potentially increase a quantity of candidate predicted blocks that may be used to encode a picture block. Once a motion vector corresponding to a PU of a current picture block is received, the motion compensation unit may locate a predicted block to which the motion vector points in one reference picture list.

The motion compensation unit may further generate syntax elements related to a block and a video slice to be used by the video decoder 30 to decode a picture block of the video slice. Alternatively, as an alternative to a slice and a corresponding syntax element, a tile group and/or a tile and a corresponding syntax element may be generated or used.

In a process of obtaining a candidate motion vector list in an advanced motion vector prediction (advanced motion vector prediction, AMVP) mode, a motion vector (motion vector, MV) that may be added to the candidate motion vector list as an alternative includes MVs of spatially neighboring and temporally neighboring picture blocks of the current block. The MV of the spatially neighboring picture block may include an MV of a left candidate picture block of the current block and an MV of an upper candidate picture block of the current block. For example, FIG. 4 is an example diagram of a candidate picture block according to an embodiment of this application. As shown in FIG. 4, a set of left candidate picture blocks includes {A0, A1}, a set of upper candidate picture blocks includes {B0, B1, B2}, and a set of temporally neighboring candidate picture blocks includes {C, T}. All the three sets may be added to the candidate motion vector list as alternatives. However, according to an existing coding standard, a maximum length of the candidate motion vector list for AMVP is 2. Therefore, it is necessary to determine to add MVs of a maximum of two picture blocks to the candidate motion vector list from the three sets in a specified order. The order may be that the set {A0, A1} of left candidate picture blocks of the current block is preferentially considered (A0 is first considered, and A1 is then considered if A0 is unavailable), the set {B0, B1, B2} of upper candidate picture blocks of the current block is then considered (B0 is first considered, B1 is then considered if B0 is unavailable, and B2 is next considered if B1 is unavailable), and finally the set {C, T} of temporally neighboring candidate picture blocks of the current block is considered (T is considered first, and C is then considered if T is unavailable).

After the candidate motion vector list is obtained, an optimal MV is determined from the candidate motion vector list by using a rate distortion cost (rate distortion cost, RD cost), and a candidate motion vector with a minimum RD cost is used as a motion vector predictor (motion vector predictor, MVP) of the current block. The rate distortion cost is calculated by using the following formula:

$$J = SAD + \lambda R.$$

J represents the RD cost, the SAD is a sum of absolute differences (sum of absolute differences, SAD), obtained by performing motion estimation by using the candidate motion vector, between a pixel value of a predicted block and a pixel value of a current block, R represents a bit rate, and $\lambda$ represents a Lagrange multiplier.

An encoder side transfers an index of the determined MVP in the candidate motion vector list to the decoder side. Further, the encoder side may perform motion search in MVP-centered neighboring domain, to obtain an actual motion vector of the current block. The encoder side calculates a motion vector difference (motion vector difference, MVD) between the MVP and the actual motion vector, and also transfers the MVD to the decoder side. The decoder side parses the index, finds the corresponding MVP from the candidate motion vector list based on the index, parses the MVD, and adds the MVD and the MVP to obtain the actual motion vector of the current block.

In a process of obtaining a candidate motion information list in the merge (Merge) mode, motion information that may be added to the candidate motion information list as an alternative includes motion information of a spatially neighboring or temporally neighboring picture block of a current block. For the spatially neighboring picture block and the temporally neighboring picture block, refer to FIG. 4. Candidate motion information corresponding to the spatially neighboring picture block in the candidate motion information list is from five spatially neighboring blocks (A0, A1, B0, B 1, and B2). If the spatially neighboring block is unavailable or intra prediction is performed, motion information of the spatially neighboring block is not added to the candidate motion information list. Temporal candidate motion information of the current block is obtained after an MV of a block at a corresponding location in a reference frame is scaled based on picture order counts (picture order counts, POCs) of the reference frame and a current frame. Whether a block at a location T in the reference frame is available is first determined. If the block is not available, a block at a location C is selected. After the candidate motion information list is obtained, optimal motion information is determined from the candidate motion information list based on the RD cost as motion information of the current block. The encoder side transfers an index value (denoted as a merge index) of a location of the optimal motion information in the candidate motion information list to the decoder side.

Entropy encoding

The entropy encoding unit 270 is configured to apply an entropy encoding algorithm or scheme (for example, a variable length coding (variable length coding, VLC) scheme, a context adaptive VLC (context adaptive VLC, CAVLC) scheme, an arithmetic coding scheme, a binarization algorithm, context adaptive binary arithmetic coding (context adaptive binary arithmetic coding, CABAC), syntax-based context adaptive binary arithmetic coding (syntax-based context adaptive binary arithmetic coding, SBAC), probability interval partitioning entropy (probability interval partitioning entropy, PIPE) encoding, or another entropy encoding method or technology) to the quantized residual coefficient 209, the inter prediction parameter, the intra prediction parameter, the loop filter parameter, and/or another syntax element, to obtain the encoded picture data 21 that can be output in a form of an encoded bitstream 21 through the output end 272, so that the video decoder 30 and the like can receive and use the parameter for decoding. The encoded bitstream 21 may be transmitted to the video decoder 30, or stored in a memory for later transmission or retrieval by the video decoder 30.

Another structural variation of the video encoder 20 may be used to encode a video stream. For example, a non-transform based encoder 20 may directly quantize a residual signal without the transform processing unit 206 for some blocks or frames. In another implementation, the encoder 20 may have the quantization unit 208 and the dequantization unit 210 that are combined into a single unit.

Decoder and decoding method

As shown in FIG. 3, the video decoder 30 is configured to receive, for example, the encoded picture data 21 (for example, the encoded bitstream 21) encoded by the encoder 20, to obtain a decoded picture 331. The encoded picture data or bitstream includes information for decoding the encoded picture data, for example, data that represents a picture block of an encoded video slice (and/or a tile group or a tile) and a related syntax element.

In an example of FIG. 3, the decoder 30 includes the entropy decoding unit 304, a dequantization unit 310, an inverse transform processing unit 312, a reconstruction unit 314 (for example, a summator 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reverse to the encoding process described with reference to the video encoder 100 in FIG. 2.

As described for the encoder 20, the dequantization unit 210, the inverse transform processing unit 212, the reconstruction unit 214, the loop filter 220, the decoded picture buffer DPB 230, the inter prediction unit 344, and the intra prediction unit 354 further form a "built-in decoder" of the video encoder 20. Correspondingly, the dequantization unit 310 may have a same function as the dequantization unit 110, the inverse transform processing unit 312 may have a same function as the inverse transform processing unit 122, the reconstruction unit 314 may have a same function as the reconstruction unit 214, the loop filter 320 may have a same function as the loop filter 220, and the decoded picture buffer 330 may have a same function as the decoded picture buffer 230. Therefore, explanations for corresponding units and functions of the video 20 encoder are correspondingly applicable to corresponding units and functions of the video decoder 30.

Entropy decoding

The entropy decoding unit 304 is configured to parse the bitstream 21 (or generally the encoded picture data 21) and perform, for example, entropy decoding on the encoded picture data 21 to obtain, for example, a quantized coefficient 309 and/or a decoded encoding parameter (not shown in FIG. 3), for example, any one or all of an inter prediction parameter (for example, a reference picture index and a motion vector), an intra prediction parameter (for example, an intra prediction mode or index), a transform parameter, a quantization parameter, a loop filter parameter, and/or another syntax element. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360, and provide another parameter to another unit of the decoder 30. The video decoder 30 may receive a syntax element at a video slice level and/or a video block level. Alternatively, as an alternative to a slice and a corresponding syntax element, a tile group and/or a tile and a corresponding syntax element may be received or used.

Dequantization

The dequantization unit 310 may be configured to receive a quantization parameter (quantization parameter, QP) (or generally, information related to the dequantization) and a quantized coefficient from the encoded picture data 21 (for example, parsed and/or decoded by the entropy decoding unit 304), and dequantize the decoded quantized coefficient 309 based on the quantization parameter, to obtain a dequantized coefficient 311. The dequantized coefficient 311 may also be referred to as a transform coefficient 311 A dequantization process may include determining a degree of quantization by using a quantization parameter determined by the video encoder 20 for each video block in a video slice, and determining a degree of dequantization that needs to be performed.

Inverse transform

The inverse transform processing unit 312 may be configured to receive the dequantized coefficient 311, also referred to as the transform coefficient 311, and transform the dequantized coefficient 311 to obtain a reconstructed residual block 213 in pixel domain. The reconstructed residual block 213 may also be referred to as a transform block 313. Transform may be inverse transform such as inverse DCT, inverse DST, inverse integer transform, or a conceptually similar inverse transform process. The inverse transform processing unit 312 may be further configured to receive a transform parameter or corresponding information from the encoded picture data 21 (for example, parsed and/or decoded by the entropy decoding unit 304), to determine transform to be performed on the dequantized coefficient 311.

Reconstruction

The reconstruction unit 314 (for example, the summator 314) is configured to add the reconstructed residual block 313 to a predicted block 365 to obtain the reconstructed block 315 in pixel domain, for example, add a pixel value of the reconstructed residual block 313 and a pixel value of the predicted block 365.

Filtering

The loop filter unit 320 (in an encoding loop or outside the encoding loop) is configured to filter the reconstructed block 315 to obtain a filtered block 321, so that, for example, pixel shift is smoothly performed or video quality is improved. The loop filter unit 320 may include one or more loop filters such as a de-blocking filter, a sample-adaptive offset (sample-adaptive offset, SAO) filter, or one or more other filters such as an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. A sequence of a filtering process may be the de-blocking filter, the SAO filter, and the ALF filter. For another example, a process referred to as luminance mapping with chrominance scaling (luma mapping with chroma scaling, LMCS) (that is, an adaptive in-loop reshaper) is added. This process is performed before de-blocking. For another example, a de-blocking filtering process may alternatively be performed on an internal sub-block edge, for example, an affine sub-block edge, an ATMVP sub-block edge, a sub-block transform (sub-block transform, SBT) edge, or an intra sub-partition (intra sub-partition, ISP) edge. Although the loop filter unit 320 is shown as the loop filter in FIG. 3, in another configuration, the loop filter unit 320 may be implemented as a post loop filter.

Decoded picture buffer

A decoded video block 321 of a picture is then stored in the decoded picture buffer 330. The decoded picture buffer 330 stores a decoded picture 331 as a reference picture, where the reference picture is used for subsequent motion compensation of another picture.

The decoder 30 is configured to output the decoded picture 311 through the output end 312 or the like, for display to a user or viewing by the user

Prediction

The inter prediction unit 344 may have a same function as the inter prediction unit 244 (particularly the motion compensation unit), and the intra prediction unit 354 may have a same function as the inter prediction unit 254, and determines split or partitioning and performs prediction based on a partitioning and/or prediction parameter or corresponding information received from the encoded picture data 21 (for example, parsed and/or decoded by the entropy decoding unit 304). The mode application unit 360 may be configured to perform prediction (intra or inter prediction) on each block based on a reconstructed picture or block or a corresponding pixel (filtered or unfiltered), to obtain the predicted block 365.

When the video slice is encoded as an intra coded (intra coded, I) slice, the intra prediction unit 354 in the mode application unit 360 is configured to generate a predicted block 365 for a picture block of a current video slice based on an indicated intra prediction mode and data from a previously decoded block of the current picture. When the video picture is encoded as an inter coded (that is, B or P) slice, the inter prediction unit 344 (for example, the motion compensation unit) in the mode application unit 360 is configured to generate a predicted block 365 for a video block of a current video slice based on a motion vector and another syntax element that is received from the entropy decoding unit 304. For inter prediction, the predicted blocks may be generated from one reference picture in one reference picture list. The video decoder 30 may construct reference frame lists 0 and 1 by using a default construction technology and based on reference pictures stored in the DPB 330. In addition to a slice (for example, a video slice) or as an alternative to the slice, a same or similar process may be performed on an embodiment of a tile group (for example, a video tile group) and/or a tile (for example, a video tile). For example, a video may be encoded by using an I, P, or B tile group and/or tile.

The mode application unit 360 is configured to determine prediction information for a video block of a current video slice by parsing a motion vector and another syntax element, and generate, by using the prediction information, a predicted block for the current video block that is being decoded. For example, the mode application unit 360 uses some received syntax elements to determine a prediction mode (for example, intra prediction or inter prediction) of a video block used to encode a video slice, a type of an inter predicted slice (for example, a B slice, P slice, or a GPB slice), construction information of one or more reference picture lists used for the slice, a motion vector of each inter coded video block used for the slice, an inter prediction state of each inter coded video block used for the slice, and other information, to decode the video block in the current video slice. In addition to a slice (for example, a video slice) or as an alternative to the slice, a same or similar process may be performed on an embodiment of a tile group (for example, a video tile group) and/or a tile (for example, a video tile). For example, a video may be encoded by using an I, P, or B tile group and/or tile.

In an embodiment, the video encoder 30 in FIG. 3 may be further configured to partition and/or decode the picture by using a slice (also referred to as a video slice), where the picture may be partitioned or decoded by using one or more (usually non-overlapping) slices. Each slice may include one or more blocks (for example, CTUs) or one or more block groups (for example, tiles in the H.265/HEVC/VVC standard and bricks in the VVC standard).

In an embodiment, the video decoder 30 shown in FIG. 3 may be further configured to partition and/or decode the picture by using a slice/tile group (also referred to as a video tile group) and/or a tile (also referred to as a video tile). The picture may be partitioned or decoded by using one or more (usually non-overlapping) slices/tile groups, each slice/tile group may include one or more blocks (for example, CTUs), one or more tiles, or the like, and each tile may have a rectangular shape or another shape, and may include one or more complete or fractional blocks (for example, CTUs).

Another variation of the video decoder 30 may be used to decode the encoded picture data 21. For example, the decoder 30 may generate and output a video stream without the loop filter unit 320. For example, a non-transform based decoder 30 may directly dequantize a residual signal without the inverse transform processing unit 312 for some blocks or frames. In another implementation, the video decoder 30 may have the dequantization unit 310 and the inverse transform processing unit 312 that are combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of the interpolation filtering, the motion vector derivation, or the loop filtering.

It should be noted that a further operation may be performed on the derived motion vector of the current block (including but not limit to a control point motion vector in an affine mode, a sub-block motion vector and a temporal motion vector in an affine, planar, or ATMVP mode, and the like). For example, a value of the motion vector is limited to a predefined range based on a bit representing the motion vector If the bit representing the motion vector is bitDepth, the range is $-2^{(bitDepth-1)}$ to $2^{(bitDepth-1)}-1$, where "^" means exponentiation. For example, if bitDepth is set to 16, the range is -32768 to 32767; or if bitDepth is set to 18, the range is -131072 to 131071. For example, the value of the derived motion vector (for example, MVs of four $4 \times 4$ sub-blocks in one $8 \times 8$ block) is limited, so that a maximum difference between integer parts of the MVs of the four $4 \times 4$ sub-blocks does not exceed N pixels, for example, does not exceed one pixel. Two methods for limiting the motion vector based on bitDepth are provided herein.

Although video encoding/decoding is mainly described in the foregoing embodiments, it should be noted that the embodiments of the coding system 10, the encoder 20, and the decoder 30 and other embodiments described in this specification may also be used for still picture processing or encoding, that is, processing or encoding/decoding of a single picture independent of any preceding or consecutive pictures in video encoding/decoding. Generally, the inter prediction unit 244 (the encoder) and the inter prediction unit 344 (the decoder) may not be available when picture processing is limited to a single picture 17. All other functions (also referred to as tools or technologies) of the video encoder 20 and the video decoder 30 may also be used for still picture processing, for example, residual calculation 204/304, transform 206, quantization 208, dequantization 210/310, (inverse) transform 212/312, partitioning 262/362, intra prediction 254/354 and/or loop filtering 220/320, entropy encoding 270, and entropy decoding 304.

FIG. 5 is an example block diagram of a video coding device 500 according to an embodiment of this application. The video coding device 500 is applicable to implementing the disclosed embodiments described in this specification. In an embodiment, the video coding device 500 may be a decoder, for example, the video decoder 30 in FIG. 1a, or may be an encoder, for example, the video encoder 20 in FIG. 1a.

The video coding device 500 includes: an ingress port 510 (or an input port 510) and a receiving unit (receiver unit, Rx) 520 configured to receive data; a processor, a logic unit, or a central processing unit (central processing unit, CPU) 530 configured to process data, where for example, the processor 530 may be a neural network processor 530; a sending unit (transmitter unit, Tx) 540 and an egress port 550 (or an output port 550) configured to transmit data; and a memory 560 configured to store data. The video coding device 500 may further include an optical-to-electrical (optical-to-electrical, OE) component and an electrical-to-optical (electrical-to-optical, EO) component coupled to the ingress port 510, the receiving unit 520, the sending unit 540, and the egress port 550, and used as an egress or an ingress of an optical signal or an electrical signal.

The processor 530 is implemented by using hardware and software. The processor 530 may be implemented as one or more processor chips, cores (for example, multi-core processors), FPGAs, ASICs, and DSPs. The processor 530 communicates with the ingress port 510, the receiving unit 520, the sending unit 540, the egress port 550, and the memory 560. The processor 530 includes a coding module 570 (for example, a neural network-based coding module 570). The coding module 570 implements the embodiments disclosed above. For example, the coding module 570 performs, processes, prepares, or provides various encoding operations. Therefore, the coding module 570 provides a substantial improvement to a function of the video coding device 500, and affects switching of the video coding device 500 to different states. Alternatively, the coding module 570 is implemented by using instructions stored in the memory 560 and executed by the processor 530.

The memory 560 may include one or more disks, tape drives, and solid-state drives and may be used as an overflow data storage device, and is configured to store a program when such a program is selected for execution, and store instructions and data that are read in a program execution process. The memory 560 may be volatile and/or non-volatile and may be a read-only memory (read-only memory, ROM), a random access memory (random access memory, RAM), a ternary content-addressable memory (ternary content-addressable memory, TCAM), and/or a static random access memory (static random access memory, SRAM).

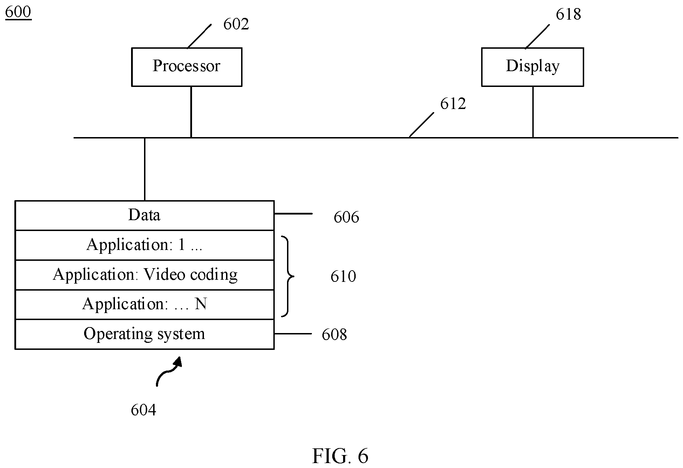

FIG. 6 is an example block diagram of an apparatus 600 according to an embodiment of this application. The apparatus 600 may be used as either or both of the source device 12 and the destination device 14 in FIG. 1a.

A processor 602 in the apparatus 600 may be a central processing unit. Alternatively, the processor 602 may be any other type of device or a plurality of devices, capable of manipulating or processing information, existing or to be developed in the future. Although the disclosed implementations may be implemented by using a single processor, for example, the processor 602 shown in the figure, a higher speed and higher efficiency are achieved by using more than one processor.

In an implementation, a memory 604 in the apparatus 600 may be a read-only memory (ROM) device or a random access memory (RAM) device. Any other appropriate type of storage device may be used as the memory 604. The memory 604 may include code and data 606 that are accessed by the processor 602 through a bus 612. The memory 604 may further include an operating system 608 and an application program 610. The application program 610 includes at least one program that allows the processor 602 to perform the method described in this specification. For example, the application program 610 may include applications 1 to N, and further include a video coding application for performing the method described in this specification.

The apparatus 600 may further include one or more output devices, for example, a display 618. In an example, the display 618 may be a touch-sensitive display combined with a display with a touch-sensitive element that can be used to sense a touch input. The display 618 may be coupled to the processor 602 through the bus 612.

Although the bus 612 in the apparatus 600 is described in this specification as a single bus, the bus 612 may include a plurality of buses. Further, a secondary storage may be directly coupled to another component of the apparatus 600 or may be accessed through a network and may include a single integrated unit, for example, a memory card or a plurality of units, for example, a plurality of memory cards. Therefore, the apparatus 600 may have a variety of configurations.

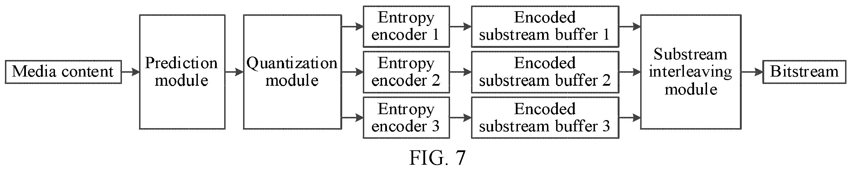

FIG. 7 shows an encoding framework according to an embodiment of this application. It can be learned from FIG. 7 that the encoding framework provided in this application includes a prediction module, a quantization module, an entropy encoder, an encoded substream buffer, and a substream interleaving module.

Input media content may be predicted, quantized, entropy-encoded, and interleaved to generate a bitstream.

It should be noted that the foregoing encoding framework is merely an example. The encoding framework may include more or fewer modules. For example, the encoding framework may include more entropy encoders, for example, five entropy encoders.

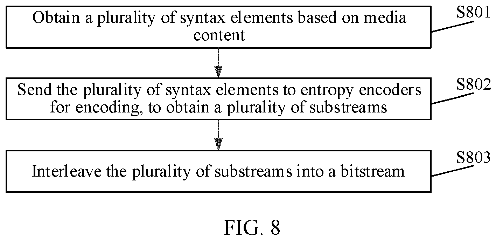

FIG. 8 shows an encoding method according to an embodiment of this application. The encoding method is applicable to the encoding framework shown in FIG. 7. As shown in FIG. 8, the encoding method may include the following steps.

S801: Obtain a plurality of syntax elements based on media content.

Optionally, the media content may include at least one of a picture, a picture slice, or a video.

In a possible implementation, the media content may be first predicted to obtain a plurality of pieces of predicted data, and then the plurality of pieces of obtained predicted data are quantized to obtain the plurality of syntax elements.

For example, an input picture may be split into a plurality of picture blocks, and then the plurality of picture blocks are input into a prediction module for prediction, to obtain a plurality of pieces of predicted data, and next the plurality of pieces of obtained predicted data are input into a quantization module for quantization, to obtain a plurality of syntax elements.

It should be noted that a specific method for quantization and prediction may be any method that can be figured out by a person skilled in the art for processing. This is not specifically limited in this embodiment of this application. For example, the quantization may be uniform quantization.

S802: Send the plurality of syntax elements to entropy encoders for encoding, to obtain a plurality of substreams.

In a possible implementation, the plurality of syntax elements may be first classified, and then different types of syntax elements are sent to different entropy encoders for encoding based on classification results, to obtain different substreams.

For example, the plurality of syntax elements may be classified into a syntax element of an R channel, a syntax element of a G channel, and a syntax element of a B channel based on a channel to which each of the plurality of syntax elements belongs. Then, the syntax element of the R channel is sent to an entropy encoder 1 for encoding to obtain a substream 1; the syntax element of the G channel is sent to an entropy encoder 2 for encoding to obtain a substream 2; and the syntax element of the B channel is sent to an entropy encoder 3 for encoding to obtain a substream 3.

In another possible implementation, the plurality of syntax elements may be sent to a plurality of entropy encoders for encoding by using a polling method, to obtain a plurality of substreams.

For example, X syntax elements in the plurality of syntax elements may be first sent to an entropy encoder 1 for encoding; then X syntax elements in remaining syntax elements are sent to an entropy encoder 2 for encoding; and X syntax elements in remaining syntax elements are next sent to an entropy encoder 3 for encoding. This process is repeated until all the syntax elements are sent to entropy encoders.

SS03: Interleave the plurality of substreams into a bitstream.

The bitstream includes a plurality of data packets, and each of the plurality of data packets includes an identifier indicating a substream to which the data packet belongs.

In a possible implementation, each of the plurality of substreams may be first split into a plurality of data packets based on a preset split length, and then the bitstream is obtained based on the plurality of data packets obtained through splitting.

For example, substream interleaving may be performed based on the following steps: Step 1: Select an encoded substream buffer. Step 2: Calculate a quantity K of data packets that can be constructed as floor(S/(N-M)) based on a size S of remaining data in the current encoded substream buffer, where floor is a round-down function. Step 3: If a current picture block is a last block of an input picture or an input picture slice, assume that K=K+1. Step 4: Obtain K consecutive segments of data of a length of N-M bits from the current encoded substream buffer. Step 5: If data in the current encoded substream buffer has less than N-M bits when the data is obtained in step 4, add several Os to the end of the data until a length of the data is N-M bits. Step 6: Use the data obtained in step 4 or step 5 as a data subject, and add a data header, where a length of the data header is M bits, and content of the data header is a substream mark value corresponding to the current encoded substream buffer, to construct a data packet shown in FIG. 5. Step 7: Sequentially input K data packets into a bitstream. Step 8: Select a next encoded substream buffer in a preset order, and go back to step 2; and if processing is completed in all encoded substream buffers, end the substream interleaving operation.

For another example, substream interleaving may alternatively be performed based on the following steps: Step 1: Select an encoded substream buffer. Step 2: Record a size of remaining data in the current encoded substream buffer as S, and if S is greater than or equal to N-M bits, extract data of a length of N-M bits from the current encoded substream buffer. Step 3: If S is less than N-M bits, if a current picture block is a last block of an input picture or an input picture slice, extract all data from the current encoded substream buffer, and add several Os to the end of the data until a length of the data is N-M bits, or if a current picture block is not a last block, skip to step 6. Step 4: Use the data obtained in step 2 or step 3 as a data subject, and add a data header, where a length of the data header is M bits, and content of the data header is a substream mark value corresponding to the current encoded substream buffer, to construct a data packet shown in FIG. 5. Step 5: Input a data packet into a bitstream. Step 6: Select a next encoded substream buffer in a preset order, and go back to step 2; and if data in all encoded substream buffers has less than N-M bits, end the substream interleaving operation.

Optionally, the encoding buffer (that is, an encoded substream buffer) may be a FIFO buffer. Data that first enters the encoding buffer first leaves the buffer and enters an entropy encoder for entropy encoding.

A specific method for obtaining the bitstream based on the plurality of data packets may be any method that can be figured out by a person skilled in the art for processing. This is not specifically limited in this embodiment of this application.

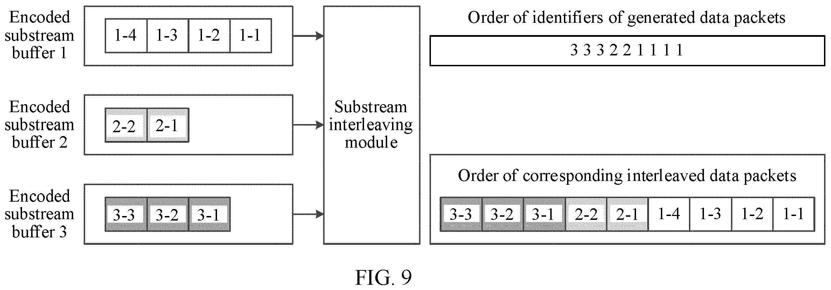

For example, as shown in FIG. 9, a substream 1 in an encoded substream buffer 1 is split into four data packets: 1-1, 1-2, 1-3, and 1-4; a substream 2 in an encoded substream buffer 2 is split into two data packets: 2-1 and 2-2; and a substream 3 in an encoded substream buffer 3 is split into three data packets: 3-1, 3-2, and 3-3. A substream interleaving module may first encode the data packets 1-1, 1-2, 1-3, and 1-4 in the encoded substream buffer 1 into a bitstream, then encode the data packets 2-1 and 2-2 in the encoded substream buffer 2 into a bitstream, and finally encode the data packets 3-1, 3-2, and 3-3 in the encoded substream buffer 3 into a bitstream.

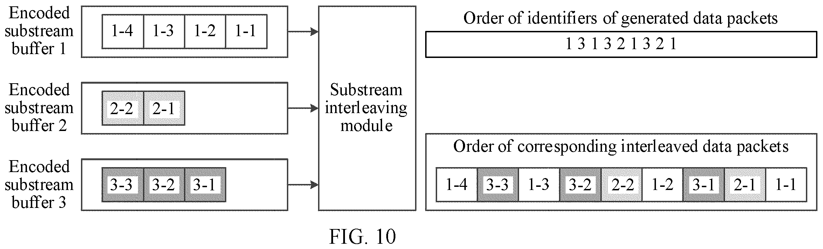

For another example, as shown in FIG. 10, a substream 1 in an encoded substream buffer 1 is split into four data packets: 1-1, 1-2, 1-3, and 1-4; a substream 2 in an encoded substream buffer 2 is split into two data packets: 2-1 and 2-2; and a substream 3 in an encoded substream buffer 3 is split into three data packets: 3-1, 3-2, and 3-3. A substream interleaving module may first encode the data packet 1-1 in the encoded substream buffer 1 into a bitstream, then encode the data packet 2-1 in the encoded substream buffer 2 into a bitstream, and next encode the data packet 3-1 in the encoded substream buffer 3 into a bitstream. Then, the data packets are encoded into bitstreams in an order of data 1-2, 2-2, 3-3, 1-3, 3-3, and 1-4.

Optionally, the data packet may include a data header and a data subject. The data header is used to store the identifier of the data packet.

For example, as shown in Table 1, a data packet of a length of N bits may include a data header of a length of M bits and a data subject of a length of N-M bits. M and N are fixed values agreed on in an encoding/decoding process.

**Table 1**

| Data length (bit) | N | |
| --- | --- | --- |
| | N-M | M |
| Name | Data header | Data subject |

Optionally, lengths of the foregoing data packets may be the same.

For example, the lengths of the foregoing data packets may all be N bits. When the data packet of the length of N bits is split, the data header of the length of M bits may be extracted, and remaining N-M bits of data are used as the data subject. In addition, data in the data header may be parsed to obtain a mark (which may also be referred to as a substream mark value) of the data packet.

It can be learned that in the encoding method provided in this embodiment of this application, each data packet in the bitstream obtained through encoding includes the identifier indicating the substream to which the data packet belongs, and a decoder side may separately send, based on the identifiers, the data packets in the bitstream to a plurality of entropy decoders for parallel decoding. Compared with decoding performed by using a single entropy decoder, parallel decoding performed by using the plurality of entropy decoders can improve a throughput of a decoder, to improve decoding performance of the decoder.

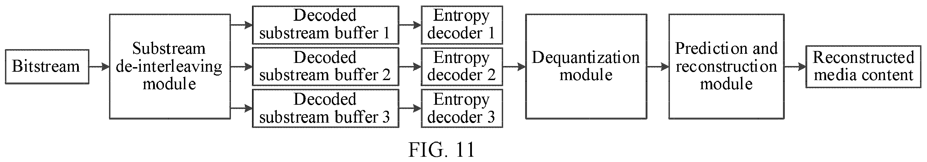

FIG. 11 shows a decoding framework according to an embodiment of this application. It can be learned from FIG. 11 that the encoding framework provided in this application includes a substream de-interleaving module, a decoded substream buffer, an entropy decoder, a dequantization module, and a prediction and reconstruction module.

It should be noted that the foregoing decoding framework is merely an example. The decoding framework may include more or fewer modules. For example, the decoding framework may include more entropy decoders, for example, five entropy decoders.

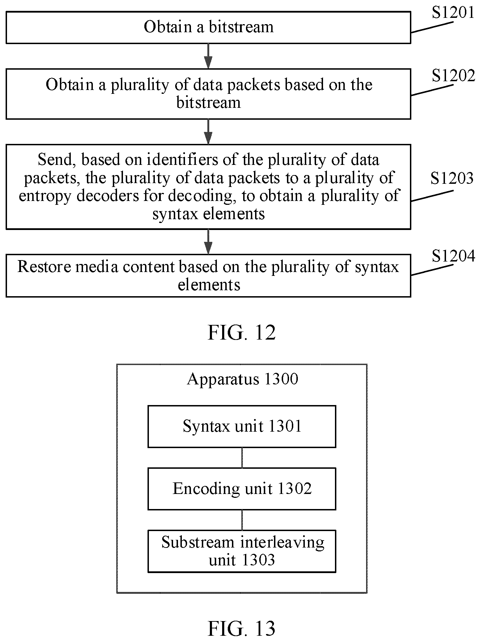

FIG. 12 shows a decoding method according to an embodiment of this application. The decoding method is applicable to the encoding framework shown in FIG. 11. As shown in FIG. 12, the decoding method may include the following steps.

S 1201: Obtain a bitstream.

For example, the bitstream may be received and obtained through a display link.

S1202: Obtain a plurality of data packets based on the bitstream.

In a possible implementation, a substream de-interleaving module may split the bitstream into a plurality of data packets based on a preset split length.

For example, the bitstream may be split into the plurality of data packets based on a split length of N bits. N is an integer.

S1203: Send, based on identifiers of the plurality of data packets, the plurality of data packets to a plurality of entropy decoders for decoding, to obtain a plurality of syntax elements.

In a possible implementation, a substream to which each of the plurality of data packets belong may be first determined based on the identifiers of the plurality of data packets. Then, each data packet is sent to a decoding buffer of the substream to which the data packet belongs. A data packet in each decoding buffer is sent to an entropy decoder corresponding to the buffer for decoding, to obtain the plurality of syntax elements.

For example, the substream de-interleaving module may first determine, based on the identifiers of the plurality of data packets, the substream to which each of the plurality of data packets belongs. Then, a data packet of a substream 1 is sent to a decoded substream buffer 1, a data packet of a substream 2 is sent to a decoded substream buffer 2, and a data packet of a substream 3 is sent to a decoded substream buffer 3. Next, an entropy decoder 1 decodes the decoded substream buffer 1 to obtain a syntax element, an entropy decoder 2 decodes the decoded substream buffer 2 to obtain a syntax element, and an entropy decoder 3 decodes the decoded substream buffer 3 to obtain a syntax element.

Optionally, the decoding buffer may be a FIFO buffer. A data packet that first enters the decoding buffer first leaves the buffer and enters the entropy decoder for entropy decoding.

S1204: Restore media content based on the plurality of syntax elements.

In a possible implementation, the plurality of syntax elements may be first dequantized to obtain a plurality of residuals; and then the plurality of residuals are predicted and reconstructed to restore the media content.

For example, a dequantization module may first dequantize the plurality of syntax elements to obtain the plurality of residuals, and then a prediction and reconstruction module predicts and reconstructs the plurality of residuals to restore the media content.

A specific method for dequantization and prediction and reconstruction may be any method that can be figured out by a person skilled in the art for processing. This is not specifically limited in this embodiment of this application. For example, the dequantization may be uniform dequantization.

Optionally, the media content may include at least one of a picture, a picture slice, or a video.

It can be learned that according to the decoding method provided in this embodiment of this application, in a decoding process, a single entropy decoder is not used for decoding, but the data packets are separately sent, based on the identifiers of the data packets, to the plurality of entropy decoders for parallel decoding. Compared with decoding performed by using the single entropy decoder, parallel decoding performed by using the plurality of entropy decoders can improve a throughput of a decoder, to improve decoding performance of the decoder. In addition, because each data packet carries an identifier, the decoder side may quickly determine, by using the identifier, an entropy decoder corresponding to the data packet, to reduce complexity of a parallel decoding process of the plurality of entropy decoders.

The following describes, with reference to FIG. 13, an encoding apparatus configured to perform the foregoing encoding method.

It may be understood that, to implement the foregoing function, the encoding apparatus includes a corresponding hardware and/or software module for performing the function. With reference to the example algorithm steps described in the embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of embodiments of this application.

In embodiments of this application, the encoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. During actual implementation, there may be another division manner.

When each functional module is obtained through division based on each corresponding function, FIG. 13 is a possible schematic composition diagram of the encoding apparatus in the foregoing embodiment. As shown in FIG. 13, the encoding apparatus 1300 may include a syntax unit 1301, an encoding unit 1302, and a substream interleaving unit 1303.

The syntax unit 1301 is configured to obtain a plurality of syntax elements based on media content.

For example, the syntax unit 1301 may be configured to perform S801 in the foregoing encoding method.

The encoding unit 1302 is configured to send the plurality of syntax elements to entropy encoders for encoding, to obtain a plurality of substreams.

For example, the encoding unit 1302 may be configured to perform S802 in the foregoing encoding method.

The substream interleaving unit 1303 is configured to interleave the plurality of substreams into a bitstream, where the bitstream includes a plurality of data packets, and the data packet includes an identifier indicating a substream to which the data packet belongs.

For example, the substream interleaving unit 1303 may be configured to perform S803 in the foregoing encoding method.

In a possible implementation, the syntax unit 1301 is specifically configured to predict the media content to obtain a plurality of pieces of predicted data; and quantize the plurality of pieces of predicted data to obtain the plurality of syntax elements.

In a possible implementation, the substream interleaving unit 1303 is specifically configured to split each of the plurality of substreams into a plurality of data packets based on a preset split length; and obtain the bitstream based on the plurality of data packets.

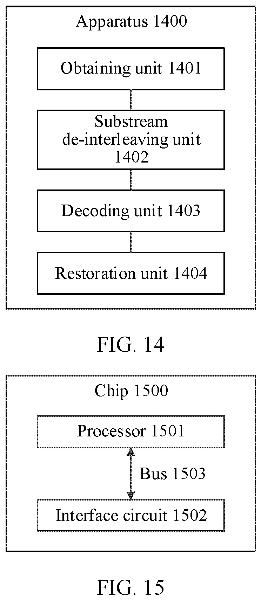

The following describes, with reference to FIG. 14, a decoding apparatus configured to perform the foregoing decoding method.

It may be understood that, to implement the foregoing function, the decoding apparatus includes a corresponding hardware and/or software module for performing the function. With reference to the example algorithm steps described in the embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of embodiments of this application.

In embodiments of this application, the decoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. During actual implementation, there may be another division manner.

When each functional module is obtained through division based on each corresponding function, FIG. 14 is a possible schematic composition diagram of the decoding apparatus in the foregoing embodiment. As shown in FIG. 14, the decoding apparatus 1400 may include an obtaining unit 1401, a substream de-interleaving unit 1402, a decoding unit 1403, and a restoration unit 1404.

The obtaining unit 1401 is configured to obtain a bitstream.

For example, the obtaining unit 1401 may be configured to perform S1201 in the foregoing decoding method.

The substream de-interleaving unit 1402 is configured to obtain a plurality of data packets based on the bitstream.

For example, the substream de-interleaving unit 1402 may be configured to perform S1202 in the foregoing decoding method.

The decoding unit 1403 is configured to send, based on identifiers of the plurality of data packets, the plurality of data packets to a plurality of entropy decoders for decoding, to obtain a plurality of syntax elements.

For example, the decoding unit 1403 may be configured to perform S1203 in the foregoing decoding method.

The restoration unit 1404 is configured to restore media content based on the plurality of syntax elements.

For example, the restoration unit 1404 may be configured to perform S1404 in the foregoing decoding method.

In a possible implementation, the substream de-interleaving unit 1402 is specifically configured to split the bitstream into the plurality of data packets based on a preset split length.

In a possible implementation, the decoding unit 1403 is specifically configured to: determine, based on the identifiers of the plurality of data packets, a substream to which each of the plurality of data packets belongs; send each data packet to a decoding buffer of the substream to which the data packet belongs; and send a data packet in each decoding buffer to an entropy decoder corresponding to the buffer for decoding, to obtain the plurality of syntax elements.

In a possible implementation, the restoration unit 1404 is specifically configured to dequantize the plurality of syntax elements to obtain a plurality of residuals; and predict and reconstruct the plurality of residuals to restore the media content. The substream de-interleaving unit is specifically configured to split the bitstream into the plurality of data packets based on a preset split length.

An embodiment of this application further provides an encoding apparatus. The apparatus includes at least one processor. When the at least one processor executes program code or instructions, the foregoing related method steps are implemented to implement the encoding method in the foregoing embodiment.

Optionally, the apparatus may further include at least one memory, and the at least one memory is configured to store the program code or the instructions.

An embodiment of this application further provides a decoding apparatus. The apparatus includes at least one processor. When the at least one processor executes program code or instructions, the foregoing related method steps are implemented to implement the decoding method in the foregoing embodiment.

Optionally, the apparatus may further include at least one memory, and the at least one memory is configured to store the program code or the instructions.

An embodiment of this application further provides a computer storage medium. The computer storage medium stores computer instructions. When the computer instructions are run on an encoding apparatus, the encoding apparatus is enabled to perform the foregoing related method steps to implement the encoding method and the decoding method in the foregoing embodiments.

An embodiment of this application further provides a computer program product. When the computer program product runs on a computer, the computer is enabled to perform the foregoing related steps to implement the encoding method and the decoding method in the foregoing embodiments.

An embodiment of this application further provides an encoding/decoding apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus is run, the processor may execute the instructions, to enable the chip to perform the encoding method and the decoding method in the foregoing method embodiments.

FIG. 15 is a diagram of a structure of a chip 1500. The chip 1500 includes one or more processors 1501 and an interface circuit 1502. Optionally, the chip 1500 may further include a bus 1503.

The processor 1501 may be an integrated circuit chip and has a signal processing capability. In an implementation process, the steps of the foregoing encoding method and the decoding method may be implemented by using an integrated logic circuit of hardware in the processor 1501, or by using instructions in a form of software.

Optionally, the processor 1501 may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods and the steps that are disclosed in embodiments of this application. The general-purpose processor may be a microprocessor, or the processor may be any conventional processor or the like.

The interface circuit 1502 may be configured to send or receive data, instructions, or information. The processor 1501 may perform processing by using data, instructions, or other information received by the interface circuit 1502, and may send processed information by using the interface circuit 1502.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the encoding apparatus or a DOP in embodiments of this application. Optionally, the interface circuit 1502 may be configured to output an execution result of the processor 1501. For the encoding method and the decoding method provided in one or more of embodiments of this application, refer to the foregoing embodiments. Details are not described herein again.

It should be noted that functions corresponding to the processor 1501 and the interface circuit 1502 may be implemented by using a hardware design, or may be implemented by using a software design, or may be implemented by using a combination of software and hardware. This is not limited herein.

The apparatus, the computer storage medium, the computer program product, and the chip provided in embodiments are all configured to perform the corresponding method provided above. Therefore, for beneficial effects that can be achieved by the apparatus, the computer storage medium, the computer program product, and the chip, refer to beneficial effects in the corresponding method provided above. Details are not described herein again.

It should be understood that sequence numbers of the foregoing processes do not mean execution orders in various embodiments of this application. The execution orders of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The foregoing units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When being implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A decoding method, comprising:

    obtaining a bitstream;
    obtaining a plurality of data packets based on the bitstream;
    sending, based on identifiers of the plurality of data packets, the plurality of data packets to a plurality of entropy decoders for decoding, to obtain a plurality of syntax elements; and
    restoring media content based on the plurality of syntax elements.

2. The method according to claim 1, wherein the sending, based on identifiers of the plurality of data packets, the plurality of data packets to a plurality of entropy decoders for decoding, to obtain a plurality of syntax elements comprises:

    determining, based on the identifiers of the plurality of data packets, a substream to which each of the plurality of data packets belongs;
    sending each data packet to a decoding buffer of the substream to which the data packet belongs; and
    sending a data packet in each decoding buffer to an entropy decoder corresponding to the buffer for decoding, to obtain the plurality of syntax elements.

3. The method according to claim 1 or 2, wherein the restoring media content based on the plurality of syntax elements comprises:

dequantizing the plurality of syntax elements to obtain a plurality of residuals; and
predicting and reconstructing the plurality of residuals to restore the media content.

4. The method according to any one of claims 1 to 3, wherein the obtaining a plurality of data packets based on the bitstream comprises:
splitting the bitstream into the plurality of data packets based on a preset split length.

5. The method according to any one of claims 1 to 4, wherein the data packet comprises a data header and a data subject, and the data header is used to store the identifier of the data packet.

6. The method according to any one of claims 1 to 5, wherein lengths of the plurality of data packets are the same.

7. An encoding method, comprising:

obtaining a plurality of syntax elements based on media content;
sending the plurality of syntax elements to entropy encoders for encoding, to obtain a plurality of substreams; and
interleaving the plurality of substreams into a bitstream, wherein the bitstream comprises a plurality of data packets, and the data packet comprises an identifier indicating a substream to which the data packet belongs.

8. The method according to claim 7, wherein the interleaving the plurality of substreams into a bitstream comprises:

splitting each of the plurality of substreams into a plurality of data packets based on a preset split length; and
obtaining the bitstream based on the plurality of data packets.

9. The method according to claim 7 or 8, wherein the obtaining a plurality of syntax elements based on media content comprises:

predicting the media content to obtain a plurality of pieces of predicted data; and
quantizing the plurality of pieces of predicted data to obtain the plurality of syntax elements.

10. The method according to any one of claims 7 to 9, wherein the data packet comprises a data header and a data subject, and the data header is used to store the identifier of the data packet.

11. The method according to any one of claims 7 to 10, wherein lengths of the plurality of data packets are the same.

12. A decoding apparatus, comprising: an obtaining unit, a substream de-interleaving unit, a decoding unit, and a restoration unit, wherein

the obtaining unit is configured to obtain a bitstream;
the substream de-interleaving unit is configured to obtain a plurality of data packets based on the bitstream;
the decoding unit is configured to send, based on identifiers of the plurality of data packets, the plurality of data packets to a plurality of entropy decoders for decoding, to obtain a plurality of syntax elements; and
the restoration unit is configured to restore media content based on the plurality of syntax elements.

13. The apparatus according to claim 12, wherein the decoding unit is specifically configured to:

determine, based on the identifiers of the plurality of data packets, a substream to which each of the plurality of data packets belongs;
send each data packet to a decoding buffer of the substream to which the data packet belongs; and
send a data packet in each decoding buffer to an entropy decoder corresponding to the buffer for decoding, to obtain the plurality of syntax elements.

14. The apparatus according to claim 12 or 13, wherein the restoration unit is specifically configured to:

dequantize the plurality of syntax elements to obtain a plurality of residuals; and
predict and reconstruct the plurality of residuals to restore the media content.

15. The apparatus according to any one of claims 12 to 14, wherein the substream de-interleaving unit is specifically configured to:
split the bitstream into the plurality of data packets based on a preset split length.

16. The apparatus according to any one of claims 12 to 15, wherein the data packet comprises a data header and a data subject, and the data header is used to store the identifier of the data packet.

17. The apparatus according to any one of claims 12 to 16, wherein lengths of the plurality of data packets are the same.

18. An encoding apparatus, wherein the apparatus comprises: a syntax unit, an encoding unit, and a substream interleaving unit, wherein

the syntax unit is configured to obtain a plurality of syntax elements based on media content;
the encoding unit is configured to send the plurality of syntax elements to entropy encoders for encoding, to obtain a plurality of substreams; and
the substream interleaving unit is configured to interleave the plurality of substreams into a bitstream, wherein the bitstream comprises a plurality of data packets, and the data packet comprises an identifier indicating a substream to which the data packet belongs.

19. The apparatus according to claim 18, wherein the substream interleaving unit is specifically configured to:

split each of the plurality of substreams into a plurality of data packets based on a preset split length; and
obtain the bitstream based on the plurality of data packets.

20. The apparatus according to claim 18 or 19, wherein the syntax unit is specifically configured to:

predict the media content to obtain a plurality of pieces of predicted data; and
quantize the plurality of pieces of predicted data to obtain the plurality of syntax elements.

21. The apparatus according to any one of claims 18 to 20, wherein the data packet comprises a data header and a data subject, and the data header is used to store the identifier of the data packet.

22. The apparatus according to any one of claims 18 to 21, wherein lengths of the plurality of data packets are the same.

23. A decoding apparatus, comprising at least one processor and a memory, wherein the at least one processor executes a program or instructions stored in the memory, to enable the decoding apparatus to implement the method according to any one of claims 1 to 6.

24. An encoding apparatus, comprising at least one processor and a memory, wherein the at least one processor executes a program or instructions stored in the memory, to enable the encoding apparatus to implement the method according to any one of claims 7 to 11.

25. A computer-readable storage medium, configured to store a computer program, wherein when the computer program is run on a computer or a processor, the computer or the processor is enabled to implement the method according to any one of claims 1 to 6 or any one of claims 7 to 11.

26. A computer program product, wherein the computer program product comprises instructions, and when the instructions are run on a computer or a processor, the computer or the processor is enabled to implement the method according to any one of claims 1 to 6 or any one of claims 7 to 11.

<u>10</u>

FIG. 1a

FIG. 1b

FIG. 2

FIG. 3

FIG. 4

Downlink port

Uplink port

FIG. 5

600

602

Processor

618

Display

612

| Data |
|---|
| Application: 1 ... |
| Application: Video coding |
| Application: ... N |
| Operating system |

606

610

608

604

FIG. 6

```
┌─────────────┐   ┌────────────┐   ┌──────────────┐   ┌─────────┐   ┌──────────────────┐
│Media content│──▶│ Prediction │──▶│ Quantization │─┬▶│ Entropy │──▶│     Encoded      │─┐
└─────────────┘   │   module   │   │    module    │ │ │encoder 1│   │substream buffer 1│ │
                  └────────────┘   └──────────────┘ │ └─────────┘   └──────────────────┘ │
                                                    │ ┌─────────┐   ┌──────────────────┐ │  ┌─────────────┐   ┌──────────┐
                                                    ├▶│ Entropy │──▶│     Encoded      │─┼─▶│  Substream  │──▶│Bitstream │
                                                    │ │encoder 2│   │substream buffer 2│ │  │ interleaving│   └──────────┘
                                                    │ └─────────┘   └──────────────────┘ │  │   module    │
                                                    │ ┌─────────┐   ┌──────────────────┐ │  └─────────────┘
                                                    └▶│ Entropy │──▶│     Encoded      │─┘
                                                      │encoder 3│   │substream buffer 3│
                                                      └─────────┘   └──────────────────┘
```

FIG. 7

| Obtain a plurality of syntax elements based on media content | S801 |

↓

| Send the plurality of syntax elements to entropy encoders for encoding, to obtain a plurality of substreams | S802 |

↓

| Interleave the plurality of substreams into a bitstream | S803 |

FIG. 8

Encoded
substream
buffer 1

| 1-4 | 1-3 | 1-2 | 1-1 |

Encoded
substream
buffer 2

| 2-2 | 2-1 |

Encoded
substream
buffer 3

| 3-3 | 3-2 | 3-1 |

Substream
interleaving
module

Order of identifiers of generated data packets

3 3 3 2 2 1 1 1 1

Order of corresponding interleaved data packets

| 3-3 | 3-2 | 3-1 | 2-2 | 2-1 | 1-4 | 1-3 | 1-2 | 1-1 |

FIG. 9

EP 4 451 675 A1

| Encoded substream buffer 1 | 1-4 | 1-3 | 1-2 | 1-1 |

Order of identifiers of generated data packets

| 1 3 1 3 2 1 3 2 1 |

| Encoded substream buffer 2 | 2-2 | 2-1 |

Substream interleaving module

| Encoded substream buffer 3 | 3-3 | 3-2 | 3-1 |

Order of corresponding interleaved data packets

| 1-4 | 3-3 | 1-3 | 3-2 | 2-2 | 1-2 | 3-1 | 2-1 | 1-1 |

FIG. 10

FIG. 11

```
┌─────────────────────────────────────────────────────┐   S1201
│              Obtain a bitstream                      ├──╱
└─────────────────────────────────────────────────────┘
                          │
                          ▼
┌─────────────────────────────────────────────────────┐   S1202
│      Obtain a plurality of data packets based on the├──╱
│                     bitstream                        │
└─────────────────────────────────────────────────────┘
                          │
                          ▼
┌─────────────────────────────────────────────────────┐
│   Send, based on identifiers of the plurality of data│
│  packets, the plurality of data packets to a plurality│  S1203
│  of entropy decoders for decoding, to obtain a plurality├──╱
│                  of syntax elements                  │
└─────────────────────────────────────────────────────┘
                          │
                          ▼
┌─────────────────────────────────────────────────────┐   S1204
│ Restore media content based on the plurality of syntax├──╱
│                      elements                        │
└─────────────────────────────────────────────────────┘
```

FIG. 12

```
┌───────────────────────────────────────────┐
│              Apparatus 1300                │
│                                            │
│   ┌────────────────────────────────────┐   │
│   │         Syntax unit 1301           │   │
│   └────────────────────────────────────┘   │
│                     │                       │
│   ┌────────────────────────────────────┐   │
│   │        Encoding unit 1302          │   │
│   └────────────────────────────────────┘   │
│                     │                       │
│   ┌────────────────────────────────────┐   │
│   │     Substream interleaving         │   │
│   │          unit 1303                 │   │
│   └────────────────────────────────────┘   │
│                                            │
└───────────────────────────────────────────┘
```

FIG. 13

Apparatus 1400

Obtaining unit 1401

Substream
de-interleaving unit
1402

Decoding unit 1403

Restoration unit 1404

FIG. 14

Chip 1500

Processor 1501

Bus 1503

Interface circuit 1502

FIG. 15

## INTERNATIONAL SEARCH REPORT

International application No.

**PCT/CN2023/076726**

### A. CLASSIFICATION OF SUBJECT MATTER

H04N19/436(2014.01)i;H04N19/433(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, ENTXT, WPABS: 熵编码器, 熵解码器, 多个, 并行, 数据包, 分组, 子流, 子序列, 子码流, 子比特流, 标识, 序号, 索引, 缓冲, 缓存, entropy encoder, entropy decoder, multi, parallel, packet, sub-media, sub-sequence, sub-bitstream, identifier, ID, index, buffer, FIFO

### C. DOCUMENTS CONSIDERED TO BE RELEVANT

| Category* | Citation of document, with indication, where appropriate, of the relevant passages | Relevant to claim No. |
|---|---|---|
| X | WO 2020153512 A1 (LG ELECTRONICS INC.) 30 July 2020 (2020-07-30) description, paragraphs [0104]-[0170] and [0182]-[0183] | 1, 3-12, 14-26 |
| Y | WO 2020153512 A1 (LG ELECTRONICS INC.) 30 July 2020 (2020-07-30) description, paragraphs [0104]-[0170] and [0182]-[0183] | 2,13 |
| Y | CN 111557093 A (COHERENT LOGIX INC.) 18 August 2020 (2020-08-18) description, paragraphs [0109]-[0120] | 2,13 |
| X | US 2011248872 A1 (RESEARCH IN MOTION LIMITED) 13 October 2011 (2011-10-13) description, paragraphs [0053]-[0064], [0072], [0083]-[0088], and [0096]-[0098] | 1, 3-4, 6-9, 11-12, 14-15, 17-20, 22-26 |
| A | CN 110324625 A (HUAWEI TECHNOLOGIES CO., LTD.) 11 October 2019 (2019-10-11) entire document | 1-26 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 May 2023** | **12 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/076726**

| Patent document cited in search report | | | Publication date (day/month/year) | Patent family member(s) | | | Publication date (day/month/year) |
|---|---|---|---|---|---|---|---|
| WO | 2020153512 | A1 | 30 July 2020 | None | | | |
| CN | 111557093 | A | 18 August 2020 | TW | 201937925 | A | 16 September 2019 |
| | | | | TWI | 718452 | B | 11 February 2021 |
| | | | | EP | 3725073 | A1 | 21 October 2020 |
| | | | | US | 2022264130 | A1 | 18 August 2022 |
| | | | | US | 2021152839 | A1 | 20 May 2021 |
| | | | | US | 11323729 | B2 | 03 May 2022 |
| | | | | TW | 202126037 | A | 01 July 2021 |
| | | | | WO | 2019118566 | A1 | 20 June 2019 |
| | | | | US | 2019182495 | A1 | 13 June 2019 |
| | | | | US | 10873754 | B2 | 22 December 2020 |
| US | 2011248872 | A1 | 13 October 2011 | US | 8174414 | B2 | 08 May 2012 |
| | | | | US | 2012194363 | A1 | 02 August 2012 |
| | | | | US | 8730071 | B2 | 20 May 2014 |
| CN | 110324625 | A | 11 October 2019 | WO | 2019185032 | A1 | 03 October 2019 |

Form PCT/ISA/210 (patent family annex) (July 2022)

**REFERENCES CITED IN THE DESCRIPTION**

**Patent documents cited in the description**

- CN 202210186914